# EUROPEAN PATENT APPLICATION

(11) **EP 4 782 731 A1**
(43) Date of publication of application: **29.07.2026**
(21) Application number: 24868281.7
(22) Date of filing: 18.09.2024
(51) Int. Cl.: F16K 11/07, F15B 11/02

(54) **VALVE DEVICE AND FLOW RATE CONTROL DEVICE PROVIDED WITH VALVE DEVICE**

(30) Priority: 22.09.2023 JP 2023158373
(71) Applicant: KYB Corporation, Minato-ku, Tokyo 105-5128 (JP)
(72) Inventor: MATSUDA, Rintaro, Tokyo 105-5128 (JP); KUBOI, Hiroaki, Tokyo 105-5128 (JP)
(74) Representative: Grünecker Patent- und Rechtsanwälte PartG mbB
(86) International application number: PCT/JP2024/033308
(87) International publication number: WO 2025/063204

(57) **Abstract**

The valve device (10, 510, 710, 810) includes: the solenoid (12); the electromagnetic proportional pressure reducing valve (20, 720, 820); and the first switching valve (30, 530, 730, 830) configured to be switched from the normal operation position (D, L, N, P) to the fail operation position (E, M, O, Q) in the event of failure of the solenoid (12). The valve body of the electromagnetic proportional pressure reducing valve (20, 720, 820) and the valve body of the first switching valve (30, 530, 730, 830) are formed integrally by a single spool (13, 513, 713, 813).

## Description

### TECHNICAL FIELD

The present invention relates to a valve device and a flow rate control device including the valve device.

### BACKGROUND ART

JP2018-84196A discloses a pump flow rate control device including: a variable displacement pump; a servo piston that changes a tilting angle of the pump; an adjustment valve that drives the servo piston; and an electromagnetic proportional valve that outputs a secondary pressure in accordance with a command current. In the pump flow rate control device described in JP2018-84196A, a displacement of the variable displacement pump is changed by changing a biasing force to the adjustment valve applied by the secondary pressure from the electromagnetic proportional valve.

In addition, it is disclosed that, in a pump displacement control device described in JP2018-84196A, when an abnormality is caused in the electromagnetic proportional valve due to disconnection of an electrical system or failure of the electromagnetic proportional valve, a switching valve is switched to apply a discharge pressure of the pump to the adjustment valve (see FIG. 4). By employing such a configuration, with the pump displacement control device described in JP2018-84196A, it is configured such that, when an abnormality is caused in the electromagnetic proportional valve, if a relationship between the discharge pressure and a discharge flow rate of the pump exceeds a predetermined horsepower control characteristic line, it is possible to limit the discharge flow rate of the pump while performing a flow rate control.

### SUMMARY OF INVENTION

However, in the pump displacement control device described in JP2018-84196A, because the switching valve and an electromagnetic proportional pressure reducing valve are provided separately, a space required for installing them becomes large.

The present invention has been made in view of the above-described problem, and an object of the present invention is to reduce the size of a switching valve and an electromagnetic proportional pressure reducing valve.

According to an aspect of the present invention, a valve device includes: a solenoid; an electromagnetic proportional pressure reducing valve configured to reduce a primary pressure and adjust the primary pressure to a secondary pressure in accordance with a command current applied to the solenoid; and a first switching valve having a normal operation position and a fail operation position, the first switching valve being configured to be switched between the normal operation position and the fail operation position in accordance with a biasing force generated by the solenoid, the first switching valve being configured to be switched from the normal operation position to the fail operation position in an event of failure of the solenoid, wherein a valve body of the electromagnetic proportional pressure reducing valve and a valve body of the first switching valve are formed integrally by a single spool, the first switching valve has: an input port, to which the primary pressure is guided, on an upstream side; an output port on a downstream side; and a drain port in communication with a tank, and when the first switching valve is switched from the normal operation position to the fail operation position, a pressure on the output port side is changed as communication between the output port and the drain port is switched to communication between the output port and the input port, or as communication between the output port and the input port is switched to communication between the output port and the drain port.

### BRIEF DESCRIPTION OF DRAWINGS

[FIG. 1] FIG. 1 is a hydraulic circuit diagram showing a configuration of a pump device including a pump displacement control device according to a first embodiment of the present embodiment.
[FIG. 2A] FIG. 2A is a sectional view showing a main relevant part of the valve device in a non-energized state of a solenoid in the valve device according to the first embodiment of the present embodiment.
[FIG. 2B] FIG. 2B is a sectional view showing the main relevant part of the valve device in an energized state of the solenoid in the valve device according to the first embodiment of the present embodiment.
[FIG. 2C] FIG. 2C is a sectional view showing the main relevant part of the valve device in a state in which the electromagnetic proportional pressure reducing valve has reached a set pressure in the valve device according to the first embodiment of the present embodiment.
[FIG. 3] FIG. 3 is a hydraulic circuit diagram of a modification of the pump displacement control device according to the first embodiment.
[FIG. 4] FIG. 4 is a hydraulic circuit diagram of a modification of the pump displacement control device according to the first embodiment.
[FIG. 5] FIG. 5 is a hydraulic circuit diagram of a modification of the pump displacement control device according to the first embodiment.
[FIG. 6] FIG. 6 is a hydraulic circuit diagram showing a configuration of the pump device including the pump displacement control device according to a second embodiment of the present embodiment.
[FIG. 7A] FIG. 7A is a sectional view showing a main relevant part of the valve device in the non-energized state of the solenoid in the valve device according to the second embodiment of the present embodiment.
[FIG. 7B] FIG. 7B is a sectional view showing a main relevant part of a valve device 10 in the energized state of the solenoid in the valve device according to the second embodiment of the present embodiment.
[FIG. 7C] FIG. 7C is a sectional view showing a main relevant part of the valve device in a state in which the electromagnetic proportional pressure reducing valve has reached the set pressure in the valve device according to the second embodiment of the present embodiment.
[FIG. 8] FIG. 8 is a hydraulic circuit diagram of a modification of the pump displacement control device according to the second embodiment.
[FIG. 9] FIG. 9 is a hydraulic circuit diagram showing a configuration of the pump device including the pump displacement control device according to a third embodiment of the present embodiment.
[FIG. 10A] FIG. 10A is a sectional view showing a main relevant part of the valve device in the non-energized state of the solenoid in the valve device according to the third embodiment of the present embodiment.
[FIG. 10B] FIG. 10B is a sectional view showing a main relevant part of the valve device in the energized state of the solenoid in the valve device according to the third embodiment of the present embodiment.
[FIG. 10C] FIG. 10C is a sectional view showing a main relevant part of the valve device in a state in which the electromagnetic proportional pressure reducing valve has reached the set pressure in the valve device according to the third embodiment of the present embodiment.
[FIG. 11] FIG. 11 is a hydraulic circuit diagram showing a configuration of the pump device including the pump displacement control device according to a fourth embodiment of the present embodiment.
[FIG. 12A] FIG. 12A is a sectional view showing a main relevant part of the valve device in the non-energized state of the solenoid in the valve device according to the fourth embodiment of the present embodiment.
[FIG. 12B] FIG. 12B is a sectional view showing a main relevant part of the valve device in the energized state of the solenoid in the valve device according to the fourth embodiment of the present embodiment.
[FIG. 12C] FIG. 12C is a sectional view showing a main relevant part of the valve device in a state in which the electromagnetic proportional pressure reducing valve has reached the set pressure in the valve device according to the fourth embodiment of the present embodiment.
[FIG. 13] FIG. 13 is a hydraulic circuit diagram of a modification of the pump displacement control device according to the first embodiment.

### DESCRIPTION OF EMBODIMENTS

### <First Embodiment>

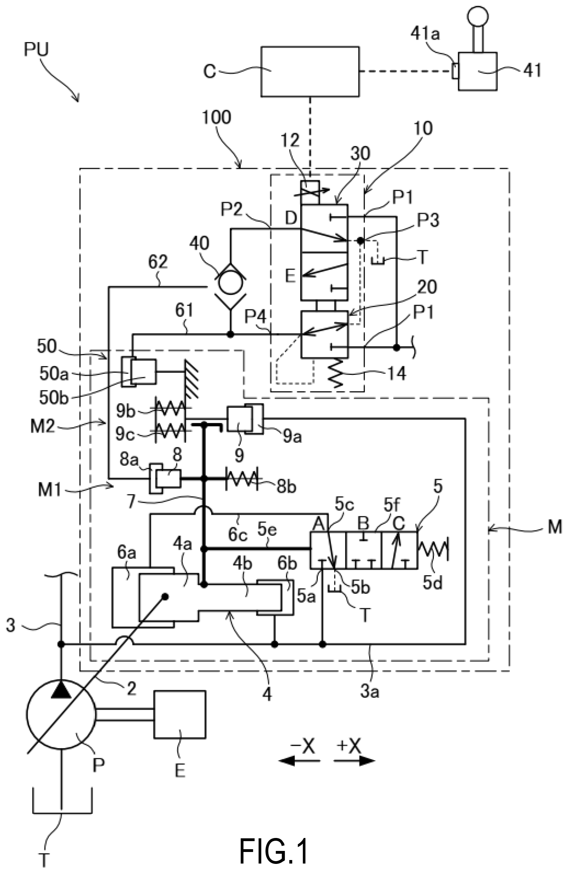

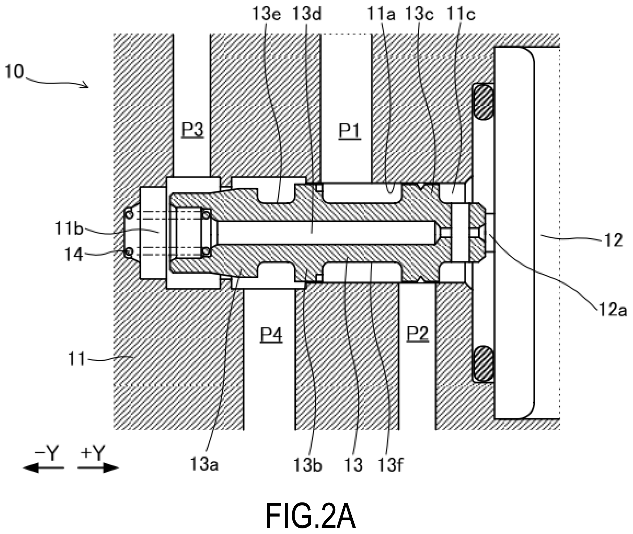

A valve device 10 according to a first embodiment of the present invention and a flow rate control device 100 including the valve device 10 will be described with reference to FIGs. 1 and 2A to 2C.

FIG. 1 is a hydraulic circuit diagram showing a configuration of a pump device PU that includes the flow rate control device 100 according to the first embodiment. The flow rate control device 100 according to the present embodiment is a device for controlling a displacement (a displacement volume) of a pump P by changing a tilting angle of a swash plate type variable displacement pump (the pump P). As shown in FIG. 1, the pump device PU includes the swash plate type variable displacement pump P and the flow rate control device 100 that controls a flow rate of the pump P. The flow rate control device 100 includes: the valve device 10; a flow rate control unit M that controls the displacement of the pump P; and a high pressure selection valve 40 serving as a second switching valve that outputs a pressure for switching horsepower control described later between an enabled state and a disabled state. Note that the displacement of the pump P refers to a discharge amount of a working fluid per one revolution of the pump P. Hereinafter, the displacement of the pump P is referred to as a "pump displacement".

In the pump device PU according to the present embodiment, working oil is used as the working fluid. Note that other working fluids such as working water, an aqueous alternative fluid, or the like may also be used instead of the working oil. The pump device PU is provided as a pressure source of hydraulic equipment that is mounted, for example, on a construction machine such as a hydraulic shovel, or the like.

The pump P is a swash plate type piston pump that is capable of changing the displacement in accordance with the tilting angle of a swash plate 2, and is rotationally driven by a motive force from an engine E serving as a driving source. The pump P sucks the working oil stored in a tank T and discharges pressurized working oil (pressurized oil) to a discharge passage 3. The working oil discharged from the pump P is supplied to the hydraulic equipment of the construction machine (not shown). Examples of the hydraulic equipment of the construction machine include a hydraulic cylinder that drives a boom, an arm, and a bucket of the hydraulic shovel, a hydraulic motor that drives a crawler of the hydraulic shovel, and the like.

The construction machine is equipped with a controller C that controls each unit of the construction machine. An operation sensor 41a serving as a detection device that detects an operation amount of an operation lever 41 operated by an operator is connected to the controller C.

As shown in FIG. 1, the valve device 10 includes: a solenoid 12; an electromagnetic proportional pressure reducing valve 20 that reduces a primary pressure and adjusts the primary pressure to a secondary pressure in accordance with a command current applied to the solenoid 12; and a first switching valve 30 that is switched to a normal operation position D or a fail operation position E in accordance with a biasing force generated by the solenoid 12. A specific configuration of the valve device 10 will be described later.

The controller C controls the electromagnetic proportional pressure reducing valve 20 based on the detection result from the operation sensor 41a. The electromagnetic proportional pressure reducing valve 20 reduces the pressure of the working oil that is supplied from a hydraulic source (not shown) in accordance with a command current from the controller C and outputs it to the flow rate control unit M. In the present embodiment, the electromagnetic proportional pressure reducing valve 20 is an electromagnetic proportional pressure reducing valve of the direct proportional type that outputs a higher secondary pressure as the command current applied to the solenoid 12 becomes larger. Hereinafter, the "secondary pressure" that is output from the electromagnetic proportional pressure reducing valve 20 is also referred to as "input pressure Pi" that is input to the flow rate control unit M.

The controller C controls the pump displacement based on the operation amount of the operation lever 41 that is detected by the operation sensor 41a. A data table of the command current values for the operation amount of the operation lever 41 is stored in a storage unit of the controller C. The controller C refers to the data table and calculates the command current value for the operation amount of the operation lever 41. The controller C increases the command current value for the electromagnetic proportional pressure reducing valve 20 as the operation amount of the operation lever 41 detected by the operation sensor 41a becomes larger. In other words, the controller C controls the electromagnetic proportional pressure reducing valve 20 such that the pump displacement becomes larger, in other words, the input pressure Pi to the flow rate control unit M becomes higher, as the operation amount of the operation lever 41 is increased. Note that, although only one operation lever 41 is shown in FIG. 1, a plurality of operation levers 41 actually exist. When the plurality of operation levers 41 are simultaneously operated, the controller C calculates the command current value in accordance with the total of these operation amounts.

The flow rate control unit M has: a flow rate control mechanism M1 for executing flow rate control that controls the pump displacement based on the input pressure Pi; a horsepower control mechanism M2 for executing horsepower control that controls the pump displacement based on a discharge pressure Pout of the pump P; a lock mechanism 50 that switches the control performed by the horsepower control mechanism M2 between an enabled state and a disabled state; a servo piston 4 that is linked to the swash plate 2 of the pump P and changes the tilting angle of the pump P; a control pressure adjusting valve 5 that adjusts a control pressure Pc for controlling a displacement of the servo piston 4; and a feedback lever 7 that is linked to a spool 5f of the control pressure adjusting valve 5 and the servo piston 4.

The flow rate control mechanism M1 performs the flow rate control that controls the tilting angle of the swash plate 2 of the pump P such that the pump displacement becomes larger as the input pressure Pi becomes higher. The horsepower control mechanism M2 performs the horsepower control that controls the pump displacement based on the discharge pressure Pout of the pump P. Note that the horsepower control is the control for preventing engine stall by controlling the pump displacement so that the motive force required for driving the pump P does not exceed an output of the engine E. In a state in which horsepower is controlled, the horsepower control mechanism M2 controls the tilting angle of the swash plate 2 of the pump P such that the pump displacement becomes smaller as the discharge pressure Pout of the pump P becomes higher.

The flow rate control mechanism M1 has: a pressure chamber 8a to which the input pressure Pi from the electromagnetic proportional pressure reducing valve 20 is guided; a flow rate control spool 8 that has the first end surface facing the pressure chamber 8a and that is displaced in accordance with the input pressure Pi; and a spring 8b that biases the flow rate control spool 8 in the direction opposite to the biasing force applied by the input pressure Pi guided to the pressure chamber 8a.

The position of the flow rate control spool 8 is set by a balance between the biasing force that is applied by the input pressure Pi guided to the pressure chamber 8a and that pushes the flow rate control spool 8 in the +X direction shown in FIG. 1 and the biasing force that is exerted by the spring 8b and that pushes the flow rate control spool 8 in the -X direction shown in FIG. 1. When the input pressure Pi is lower than a predetermined pressure, the flow rate control spool 8 is positioned at the initial position by the biasing force exerted by the spring 8b, and is moved in the +X direction as the input pressure Pi becomes higher than the predetermined pressure.

The horsepower control mechanism M2 has: a pressure chamber 9a to which the discharge pressure Pout of the pump P is guided through a branch passage 3a branched from the discharge passage 3; a horsepower control spool 9 that has the first end surface facing the pressure chamber 9a and that is displaced in accordance with the discharge pressure Pout; and springs 9b and 9c that bias the horsepower control spool 9 in the direction opposite to the biasing force applied by the discharge pressure Pout guided to the pressure chamber 9a.

The position of the horsepower control spool 9 is set by a balance between the biasing force that is applied by the working oil at the discharge pressure Pout and that pushes the horsepower control spool 9 in the -X direction and the biasing force that is exerted by the springs 9b and 9c and that pushes the horsepower control spool 9 in the +X direction. When the discharge pressure Pout is lower than a predetermined pressure, the horsepower control spool 9 is biased in the +X direction by the biasing force exerted by the springs 9b and 9c and is positioned at the initial position separated from the feedback lever 7.

In the present embodiment, the flow rate control spool 8 and the horsepower control spool 9 are arranged so as to be parallel to each other and such that the feedback lever 7 is sandwiched therebetween.

The lock mechanism 50 has: a pressure chamber 50a to which the secondary pressure adjusted by the electromagnetic proportional pressure reducing valve 20 is guided; and a lock pin 50b that has the first end surface facing the pressure chamber 50a and that is displaced in accordance with the pressure of the working oil guided to the pressure chamber 50a. When the pressure acting on the lock pin 50b is equal to or higher than a predetermined value, the horsepower control by the horsepower control mechanism M2 is disabled, and when the pressure acting on the lock pin 50b is less than the predetermined value, the horsepower control by the horsepower control mechanism M2 is enabled. The secondary pressure adjusted by the electromagnetic proportional pressure reducing valve 20 is guided to the pressure chamber 50a through a passage 61.

The biasing force in the +X direction by the pressure of the working oil guided to the pressure chamber 50a acts on the lock pin 50b. This biasing force opposes the biasing force in the -X direction acting on the horsepower control spool 9 that is generated by the pressure of the working oil guided to the pressure chamber 9a. The biasing force in the +X direction obtained by adding the biasing force acting on the lock pin 50b and the biasing force exerted by the springs 9b and 9c is set so as to be larger than the biasing force in the -X direction acting on the horsepower control spool 9 that is generated when the maximum discharge pressure Poutmax acts on the horsepower control spool 9. Therefore, in a state in which a pressure equal to or higher than a predetermined value (for example, the secondary pressure) acts on the lock pin 50b, the horsepower control spool 9 does not contact the feedback lever 7, and the biasing force in the -X direction due to the horsepower control spool 9 does not act on the feedback lever 7. That is, in a state in which a pressure equal to or higher than a predetermined value acts on the lock pin 50b, the horsepower control by the horsepower control spool 9 is not executed. In other words, for example, in a situation in which the secondary pressure is not output from the electromagnetic proportional pressure reducing valve 20 (at the time of the fail state), the horsepower control by the horsepower control spool 9 is executed because the secondary pressure does not act on the lock pin 50b. As described above, in the flow rate control device 100, the flow rate control is executed at the time of the normal operation state and the horsepower control is executed at the time of the fail state. The flow rate control and the horsepower control will be described later.

The servo piston 4 is linked to the swash plate 2. The tilting angle of the swash plate 2 is changed as the servo piston 4 is moved in the axial direction (in the X direction). The servo piston 4 has a large-diameter portion 4a that is formed on the first end side in the axial direction and a small-diameter portion 4b that is formed on the second end side in the axial direction and that has a smaller diameter than the large-diameter portion 4a.

A housing (not shown) of the pump P is formed with a large-diameter side chamber 6a that faces the large-diameter portion 4a of the servo piston 4 and a small-diameter side chamber 6b that faces the small-diameter portion 4b of the servo piston 4. A pressure receiving area of the large-diameter portion 4a of the servo piston 4 on which a pressure of the large-diameter side chamber 6a acts is larger than a pressure receiving area of the small-diameter portion 4b of the servo piston 4 on which a pressure of the small-diameter side chamber 6b acts. The large-diameter side chamber 6a is connected to a control pressure port 5c of the control pressure adjusting valve 5 through a control pressure passage 6c, and the small-diameter side chamber 6b is connected to the branch passage 3a branched from the discharge passage 3 of the pump P.

The control pressure adjusting valve 5 has: a pump port 5a that is connected to the branch passage 3a; a tank port 5b that is connected to a tank T through a drain passage; the control pressure port 5c that is connected to the large-diameter side chamber 6a through the control pressure passage 6c; the spool 5f; a spring 5d that biases the spool 5f in the direction to switch the spool 5f from a tank communication position A described later to a pump communication position C; and a linkage part 5e that is linked to the feedback lever 7.

The control pressure adjusting valve 5 has the tank communication position A, a shut-off position B, and the pump communication position C. The tank communication position A is the position at which the control pressure port 5c and the tank port 5b are communicated with each other and the communication between the pump port 5a and the control pressure port 5c is shut off. The shut-off position B is the position at which the communication between the pump port 5a and the control pressure port 5c is shut off and the communication between the tank port 5b and the control pressure port 5c is shut off. The pump communication position C is the position at which the pump port 5a and the control pressure port 5c are communicated with each other and the communication between the tank port 5b and the control pressure port 5c is shut off.

When the control pressure adjusting valve 5 is switched to the tank communication position A, the working oil is discharged from the large-diameter side chamber 6a to the tank T through the control pressure adjusting valve 5, and the pressure in the large-diameter side chamber 6a is decreased. When the control pressure adjusting valve 5 is switched to the shut-off position B, the pressure in the large-diameter side chamber 6a is maintained at a constant pressure. When the control pressure adjusting valve 5 is switched to the pump communication position C, the working oil is guided to the large-diameter side chamber 6a through the control pressure adjusting valve 5, and the pressure in the large-diameter side chamber 6a is increased. In the initial state, the spool 5f of the control pressure adjusting valve 5 is held at the pump communication position C by the biasing force exerted by the spring 5d.

When the pressure in the large-diameter side chamber 6a becomes higher than a predetermined pressure, the servo piston 4 is moved in the +X direction in FIG. 1. As a result, the tilting angle of the pump P is reduced, and the displacement of the pump P is reduced. When the pressure in the large-diameter side chamber 6a becomes lower than the predetermined pressure, the servo piston 4 is moved in the -X direction in FIG. 1. As a result, the tilting angle of the pump P is increased, and the displacement of the pump P is increased.

The feedback lever 7 feeds back the displacement of the servo piston 4 to the spool 5f of the control pressure adjusting valve 5.

The high pressure selection valve 40 outputs, to a passage 62, whichever is higher of the secondary pressure that is output from the electromagnetic proportional pressure reducing valve 20 (a secondary pressure port P4 of the valve device 10) and an output pressure output from the first switching valve 30 (an output port P2 of the valve device 10). The pressure output to the passage 62 is guided to the pressure chamber 8a of the flow rate control mechanism M1.

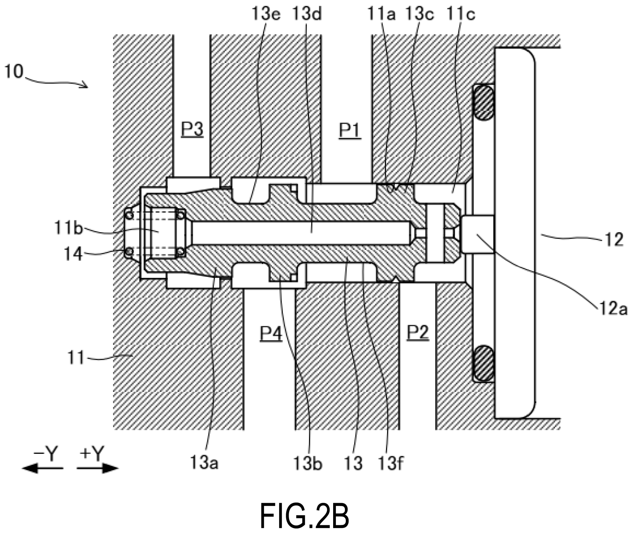

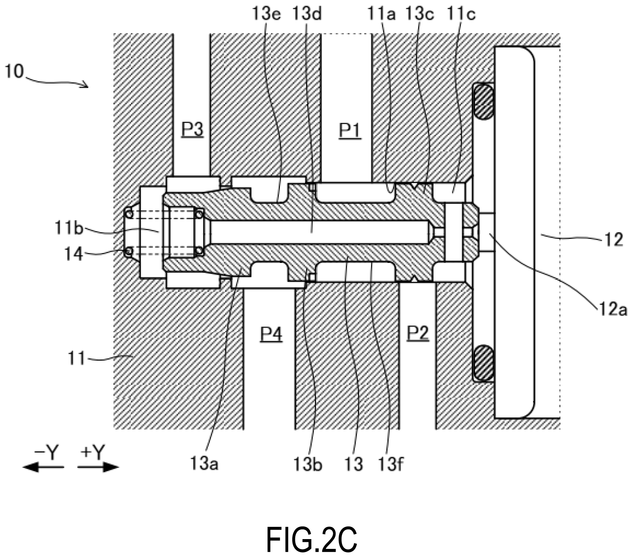

Next, a specific configuration of the valve device 10 will be described with reference to FIGs. 1 and 2A to 2C. FIG. 2A is a sectional view showing a main relevant part of the valve device 10 in a non-energized state of the solenoid 12. FIG. 2B is a sectional view showing the main relevant part of the valve device 10 in an energized state of the solenoid 12. FIG. 2C is a sectional view showing the main relevant part of the valve device 10 in a state in which the electromagnetic proportional pressure reducing valve 20 has reached a set pressure.

As shown in FIGs. 2A, 2B, and 2C, the valve device 10 includes a housing 11, the solenoid 12, a spool 13 serving as a valve body, and a spring 14.

The housing 11 is formed with an accommodation hole 11a that is formed in a bottomed shape and that slidably accommodates the spool 13. An opening portion of the accommodation hole 11a is closed by the solenoid 12. The spring 14 that biases the spool 13 in the +Y direction as the second direction is provided on the first end surface side of the spool 13. The solenoid 12 that biases the spool 13 in the -Y direction as the first direction is provided on the second end surface side of the spool 13.

The housing 11 further includes: an input port P1 to which the primary pressure (the working oil from the hydraulic source) is guided; the output port P2; a drain port P3 that communicates with a tank T; and the secondary pressure port P4 from which the secondary pressure, which has been adjusted by reducing the primary pressure, is output (see also FIG. 1). The input port P1 is an upstream side port in the valve device 10, and the output port P2 and the secondary pressure port P4 are downstream side ports in the valve device 10.

The solenoid 12 is a solenoid that is driven by a direct current. The solenoid 12 changes the biasing force in the -Y direction acting on a plunger 12a in accordance with a magnitude of a current applied thereto. The plunger 12a of the solenoid 12 is in contact with the second end surface of the spool 13.

The spool 13 is biased in the +Y direction by the biasing force exerted by the spring 14 and is pressed against the plunger 12a of the solenoid 12. In other words, the plunger 12a of the solenoid 12 and the second end surface of the spool 13 are in a state in which they are always in contact with each other. Therefore, the position of the spool 13 is changed when the current applied to the solenoid 12 is changed and the plunger 12a is moved.

As shown in FIGs. 2A, 2B, and 2C, the spool 13 includes: a first land portion 13a; a second land portion 13b; a third land portion 13c; a communication passage 13d that extends in the axial direction of the spool 13 and that communicates a space 11b facing the first end surface of the spool 13 with a space 11c facing the second end surface of the spool 13; a first annular groove 13e that is formed between the first land portion 13a and the second land portion 13b; and a second annular groove 13f that is formed between the second land portion 13b and the third land portion 13c.

The first land portion 13a, the second land portion 13b, and the third land portion 13c are provided at intervals in the axial direction in this order from the spring 14 side. The first land portion 13a is formed to have a tapered shape whose diameter is reduced toward the first end surface side (toward the spring 14 side) of the spool 13. The outer diameter of a portion of the first land portion 13a that faces the second land portion 13b across the first annular groove 13e is smaller than the outer diameter of the second land portion 13b, and the second land portion 13b and the third land portion 13c are formed to have the same outer diameter.

The first land portion 13a controls the communication between the secondary pressure port P4 and the drain port P3. The second land portion 13b controls the communication between the input port P1 and the secondary pressure port P4. The third land portion 13c controls the communication between the input port P1 and the output port P2, and the communication between the output port P2 and the drain port P3.

The space 11b is provided on a bottom surface side of the accommodation hole 11a and is defined by the housing 11 and the spool 13 (the first land portion 13a). The space 11b is always in communication with the drain port P3.

The space 11c is provided on the opening side of the accommodation hole 11a and is defined by the housing 11, the solenoid 12, and the spool 13 (the third land portion 13c). The space 11c is always in communication with the drain port P3 through the communication passage 13d and the space 11b.

In the present embodiment, the solenoid 12, the spring 14, the input port P1, the secondary pressure port P4, the drain port P3, the first land portion 13a of the spool 13, and the second land portion 13b of the spool 13 constitute the electromagnetic proportional pressure reducing valve 20. In addition, the solenoid 12, the spring 14, the input port P1, the output port P2, the drain port P3, and the third land portion 13c of the spool 13 constitute the first switching valve 30. In other words, in the valve device 10 of the present embodiment, the electromagnetic proportional pressure reducing valve 20 and the first switching valve 30 are formed integrally, and the valve body of the electromagnetic proportional pressure reducing valve 20 and the valve body of the first switching valve 30 are formed integrally by a single spool 13. Furthermore, the electromagnetic proportional pressure reducing valve 20 and the first switching valve 30 are controlled by a single solenoid 12.

An operation of the valve device 10 configured as described above will be described.

In a state in which no current is applied to the solenoid 12, the spool 13 is positioned at the position shown in FIG. 2A. Specifically, the secondary pressure port P4 and the drain port P3 are communicated with each other, and the communication between the input port P1 and the secondary pressure port P4 is shut off by the second land portion 13b. Furthermore, the input port P1 and the output port P2 are communicated with each other, and the communication between the output port P2 and the drain port P3 is shut off by the third land portion 13c. At the position shown in FIG. 2A, because the input port P1 and the output port P2 are communicated with each other, the working oil from the hydraulic source is supplied to the pressure chamber 8a of the flow rate control mechanism M1 through the input port P1, the output port P2, the high pressure selection valve 40, and the passage 62 (see also FIG. 1).

When the operation lever 41 is operated and the command current is applied to the solenoid 12 from the controller C, the biasing force exerted by the solenoid 12 exceeds the biasing force exerted by the spring 14, and the spool 13 is moved from the position shown in FIG. 2A to the position shown in FIG. 2B (in the -Y direction). As a result, the input port P1 and the secondary pressure port P4 are communicated with each other, and the communication between the input port P1 and the output port P2 is shut off by the third land portion 13c. In addition, a state in which the communication between the secondary pressure port P4 and the drain port P3 is shut off by the first land portion 13a is established. Furthermore, the output port P2 communicates with the drain port P3 through the space 11c, the communication passage 13d, and the space 11b.

Because the input port P1 and the secondary pressure port P4 are communicated with each other, the working oil from the hydraulic source is supplied to the secondary pressure port P4, and the pressure in the secondary pressure port P4 is increased. The working oil in the secondary pressure port P4 is supplied to the pressure chamber 50a of the lock mechanism 50 through the passage 61. As a result, the horsepower control by the horsepower control mechanism M2 is disabled.

In addition, the working oil in the secondary pressure port P4 is guided to the pressure chamber 8a of the flow rate control mechanism M1 through the high pressure selection valve 40 and the passage 62 (see FIG. 1). Note that, in the state shown in FIG. 2B, because the pressure in the output port P2 is at a drain pressure, the pressure from the secondary pressure port P4 is output to the passage 62 from the high pressure selection valve 40.

As described above, the outer diameter of the portion of the first land portion 13a that faces the second land portion 13b across the first annular groove 13e is smaller than the outer diameter of the second land portion 13b. Therefore, when the secondary pressure acts on these portions, the biasing force in the +Y direction (in the rightward direction) in FIG. 2B acts on the spool 13 due to the difference in the pressure receiving areas of these portions. This biasing force biases the spool 13 so as to oppose the biasing force exerted by the solenoid 12. In other words, the pressure acting due to the difference in the pressure receiving areas between the first land portion 13a and the second land portion 13b corresponds to a feedback pressure in the electromagnetic proportional pressure reducing valve 20. Note that the configuration related to the difference in pressure receiving areas between the first land portion 13a and the second land portion 13b corresponds to a "feedback portion" described in the Scope of Claims.

When the secondary pressure is increased, the biasing force that biases the spool 13 in the +Y direction by the secondary pressure (the feedback pressure) is increased, and the spool 13 is moved in the +Y direction (in the rightward direction) in FIG. 2B. As a result, the supply of the working oil from the input port P1 to the secondary pressure port P4 is reduced. Then, when the spool 13 is moved to the position (the position shown in FIG. 2C) at which a total biasing force of the biasing force in the +Y direction by the feedback pressure acting on the spool 13 and the biasing force in the +Y direction exerted by the spring 14 is balanced with the biasing force in the -Y direction exerted by the solenoid 12, the communication between the input port P1 and the secondary pressure port P4 is shut off by the second land portion 13b. Note that, in the state shown in FIG. 2C, the output port P2 and the drain port P3 are held at a state in which they are communicated with each other.

In the valve device 10, the first switching valve 30 is used for detecting failure (fail) of the solenoid 12. This will be specifically described below.

As shown in FIG. 1, the first switching valve 30 has the normal operation position D (corresponding to the positions shown in FIGs. 2B and 2C) and the fail operation position E (corresponding to the position shown in FIG. 2A). At the normal operation position D, the communication between the input port P1 and the output port P2 is shut off, and the output port P2 and the drain port P3 are communicated with each other. At the fail operation position E, the input port P1 and the output port P2 are communicated with each other, and the communication between the output port P2 and the drain port P3 is shut off.

In the present embodiment, even when the operation lever 41 is not operated, a constant command current is applied to the solenoid 12 in a state in which the pump device PU is under operation (hereinafter, this command current value is referred to as "minimum command current"). In a state in which the minimum command current is applied to the solenoid 12 of the valve device 10, the first switching valve 30 is switched to the normal operation position D. Therefore, in a state in which the pump device PU is under operation, the first switching valve 30 is held at the normal operation position D regardless of whether the operation lever 41 is operated or not. As a result, the output port P2 is maintained at the drain pressure.

For example, when a failure such as disconnection of a coil of the solenoid 12 or no command current being output from the controller C to the solenoid 12 occurs (hereinafter, such a situation is also referred to as "in the event of failure of the solenoid 12"), the biasing force exerted by the solenoid 12 is lost, and so, the first switching valve 30 is switched from the normal operation position D to the fail operation position E by the biasing force exerted by the spring 14. As a result, the input port P1 and the output port P2 are communicated with each other, and so, the primary pressure (the working oil from the hydraulic source) is output from the output port P2. In addition, in the event of failure of the solenoid 12, the secondary pressure output from the electromagnetic proportional pressure reducing valve 20 is decreased. As a result, the pressure in the pressure chamber 50a of the lock mechanism 50 is decreased, and the horsepower control by the horsepower control mechanism M2 is enabled. In addition, when the secondary pressure output from the electromagnetic proportional pressure reducing valve 20 is decreased, the high pressure selection valve 40 outputs the primary pressure (the working oil from the hydraulic source) output from the output port P2 to the passage 62. Therefore, in the event of failure of the solenoid 12, the primary pressure (the working oil from the hydraulic source) is supplied to the pressure chamber 8a of the flow rate control mechanism M1. Therefore, the flow rate control mechanism M1 is brought into a state of requesting the maximum discharge flow rate from the pump P.

Next, the operation of the pump device PU will be described with reference to FIG. 1.

When the operation lever 41 is operated, as described above, the controller C calculates the command current value for the operation amount of the operation lever 41 based on the detection result from the operation sensor 41a, and applies the calculated command current to the solenoid 12 of the valve device 10. When the command current applied to the solenoid 12 is increased, the secondary pressure (the input pressure Pi) output from the electromagnetic proportional pressure reducing valve 20 is increased, and the pressure supplied to the pressure chamber 8a of the flow rate control mechanism M1 through the secondary pressure port P4, the high pressure selection valve 40, and the passage 62 is also increased. In addition, at this time, the secondary pressure (the input pressure Pi) output from the electromagnetic proportional pressure reducing valve 20 is also guided to the pressure chamber 50a of the lock mechanism 50 through the passage 61. As a result, as described above, the horsepower control by the horsepower control mechanism M2 is disabled, and the flow rate control by the flow rate control mechanism M1 is executed.

Next, the flow rate control by the flow rate control mechanism M1 will be described.

When the operation lever 41 is operated and the secondary pressure (the input pressure Pi) output from the electromagnetic proportional pressure reducing valve 20, in other words, the pressure of the working oil in the pressure chamber 8a is increased, the biasing force in the +X direction acting on the flow rate control spool 8 is increased. As a result, the flow rate control spool 8 is moved in the +X direction against the biasing force exerted by the spring 8b. The flow rate control spool 8 is moved and stopped at the position at which the biasing force that is applied by the pressure of the working oil in the pressure chamber 8a and that pushes the flow rate control spool 8 in the +X direction is balanced with the biasing force that is exerted by the spring 8b and that pushes the flow rate control spool 8 in the -X direction.

In addition, because the spool 5f of the control pressure adjusting valve 5 is linked to the feedback lever 7, when the feedback lever 7 is pushed in the +X direction by the flow rate control spool 8, the control pressure adjusting valve 5 is switched to the tank communication position A. At the tank communication position A, because the tank port 5b and the control pressure port 5c are communicated with each other, the working oil is discharged from the large-diameter side chamber 6a to the tank T, and the biasing force that biases the servo piston 4 in the +X direction is decreased. As a result, the servo piston 4 is moved in the -X direction, and the tilting angle of the swash plate 2 is increased. In other words, the pump displacement is increased.

Because the spool 5f of the control pressure adjusting valve 5 is linked to the feedback lever 7, when the servo piston 4 is moved in the -X direction, the spool 5f of the control pressure adjusting valve 5 is switched from the tank communication position A to the shut-off position B. As a result, the discharge of the working oil from the large-diameter side chamber 6a is stopped, and therefore, the servo piston 4 is stopped. As a result, the tilting of the swash plate 2 is stopped.

As described above, in the flow rate control by the flow rate control mechanism M1, the tilting angle of the swash plate 2 is increased in accordance with the increase in the secondary pressure (the input pressure Pi) output from the electromagnetic proportional pressure reducing valve 20, in other words, the increase in the operation amount of the operation lever 41.

In contrast, when the operation amount of the operation lever 41 is reduced (the operation lever 41 is returned) and the secondary pressure (the input pressure Pi) output from the electromagnetic proportional pressure reducing valve 20, in other words, the pressure of the working oil in the pressure chamber 8a is decreased, the biasing force in the +X direction acting on the flow rate control spool 8 is decreased. As a result, the flow rate control spool 8 is moved in the -X direction by the biasing force exerted by the spring 8b. The flow rate control spool 8 is moved and stopped at a position at which the biasing force that is applied by the pressure of the working oil in the pressure chamber 8a and that pushes the flow rate control spool 8 in the +X direction is balanced with the biasing force that is exerted by the spring 8b and that pushes the flow rate control spool 8 in the -X direction.

In addition, because the spool 5f of the control pressure adjusting valve 5 is linked to the feedback lever 7, when the feedback lever 7 is pulled in the -X direction by the flow rate control spool 8, the control pressure adjusting valve 5 is switched from the shut-off position B to the pump communication position C. At the pump communication position C, because the pump port 5a and the control pressure port 5c are communicated with each other, the discharge pressure Pout is supplied to the large-diameter side chamber 6a, and the biasing force that biases the servo piston 4 in the +X direction is increased. As a result, the servo piston 4 is moved in the +X direction, and the tilting angle of the swash plate 2 is reduced. In other words, the pump displacement is decreased.

Because the spool 5f of the control pressure adjusting valve 5 is linked to the feedback lever 7, when the servo piston 4 is moved in the +X direction, the spool 5f of the control pressure adjusting valve 5 is switched from the pump communication position C to the shut-off position B. As a result, the supply of the working oil to the large-diameter side chamber 6a is stopped, and therefore, the servo piston 4 is stopped. As a result, the tilting of the swash plate 2 is also stopped.

As described above, in the flow rate control by the flow rate control mechanism M1, the tilting angle of the swash plate 2 is decreased in accordance with the decrease in the secondary pressure (the input pressure Pi) output from the electromagnetic proportional pressure reducing valve 20, in other words, the decrease in the operation amount of the operation lever 41.

When the operation of the operation lever 41 is finished (when the operation amount of the operation lever 41 becomes 0 (zero)), the secondary pressure (the input pressure Pi) output from the electromagnetic proportional pressure reducing valve 20 is decreased, and the flow rate control spool 8 is moved in the -X direction by the biasing exerted by the spring 8b and returned to the initial position.

As described above, in the flow rate control by the flow rate control mechanism M1, the flow rate discharged from the pump P is controlled by controlling the tilting angle of the swash plate 2 in accordance with the operation amount of the operation lever 41.

Note that, in the present embodiment, even when the operation lever 41 is not operated, the minimum command current is applied to the solenoid 12 as described above. As a result, a predetermined secondary pressure (the input pressure Pi) is supplied from the electromagnetic proportional pressure reducing valve 20 to the pressure chamber 50a of the lock mechanism 50 such that the horsepower control by the horsepower control mechanism M2 is not executed.

As described above, in the flow rate control by the flow rate control mechanism M1, it is possible to control the pump displacement of the pump P by driving the flow rate control spool 8 and controlling the tilting angle of the swash plate 2 based on the secondary pressure (the input pressure Pi) in accordance with the operation amount of the operation lever 41.

Next, the horsepower control by the horsepower control mechanism M2 will be described.

The horsepower control is performed in the event of failure of the solenoid 12 of the valve device 10 (the electromagnetic proportional pressure reducing valve 20) as described above. The horsepower control is performed by the discharge pressure Pout and the control pressure Pc of the pump P regardless of the operation amount of the operation lever 41.

As described above, in the event of failure of the solenoid 12, the first switching valve 30 is switched to the fail operation position E, and the primary pressure is supplied to the pressure chamber 8a of the flow rate control mechanism M1. Therefore, the flow rate control mechanism M1 is brought into the state of requesting the maximum discharge flow rate from the pump P.

When the discharge pressure Pout of the pump P is increased, the discharge pressure Pout of the pump P is supplied to the small-diameter side chamber 6b and the pressure chamber 9a of the horsepower control mechanism M2 through the discharge passage 3 and the branch passage 3a, and the pressures in the small-diameter side chamber 6b and the pressure chamber 9a are increased.

Even if the pressure in the small-diameter side chamber 6b is increased, because the large-diameter side chamber 6a is shut off in a state in which the spool 5f of the control pressure adjusting valve 5 is positioned at the shut-off position B, the servo piston 4 is not moved.

When the pressure in the pressure chamber 9a is increased, the biasing force in the -X direction acts on the horsepower control spool 9. In the event of failure of the solenoid 12, as described above, no pressure is supplied to the pressure chamber 50a of the lock mechanism 50, and so, the horsepower control spool 9 is moved in the -X direction against the biasing force exerted by the springs 9b and 9c, and is brought into contact with the feedback lever 7 to push the feedback lever 7 in the -X direction.

Because the spool 5f of the control pressure adjusting valve 5 is linked to the feedback lever 7, when the feedback lever 7 is pushed in the -X direction by the horsepower control spool 9, the control pressure adjusting valve 5 is switched from the shut-off position B to the pump communication position C. At the pump communication position C, because the pump port 5a and the control pressure port 5c are communicated with each other, the control pressure Pc supplied to the large-diameter side chamber 6a is increased. As a result, the biasing force that biases the servo piston 4 in the +X direction is increased, and the servo piston 4 is moved in the +X direction. As a result, the tilting angle of the swash plate 2 is reduced, and the pump displacement is decreased.

Then, when the servo piston 4 is moved in the +X direction, the servo piston 4 pushes the spool 5f of the control pressure adjusting valve 5 in the +X direction via the feedback lever 7. As a result, the spool 5f of the control pressure adjusting valve 5 is switched from the pump communication position C to the shut-off position B.

As described above, in the horsepower control by the horsepower control mechanism M2, when the discharge pressure Pout of the pump P is increased, the control is performed to make the tilting angle of the swash plate 2 smaller accordingly.

On the other hand, when the discharge pressure Pout of the pump P is decreased, the pressures in the pressure chamber 9a and the small-diameter side chamber 6b are decreased.

Even if the pressure in the small-diameter side chamber 6b is decreased, because the large-diameter side chamber 6a is shut off in a state in which the spool 5f of the control pressure adjusting valve 5 is positioned at the shut-off position B, the servo piston 4 is not moved.

When the pressure in the pressure chamber 9a is decreased, the horsepower control spool 9 is pushed in the +X direction by the biasing force exerted by the springs 9b and 9c. Because the spool 5f of the control pressure adjusting valve 5 is linked to the feedback lever 7, when the feedback lever 7 is pushed in the +X direction by the horsepower control spool 9, the control pressure adjusting valve 5 is switched from the shut-off position B to the tank communication position A. At the tank communication position A, because the tank port 5b and the control pressure port 5c are communicated with each other, the pressure in the large-diameter side chamber 6a (the control pressure Pc) is decreased. As a result, the biasing force that biases the servo piston 4 in the +X direction is decreased, and the servo piston 4 is moved in the -X direction. As a result, the tilting angle of the swash plate 2 is increased, and the pump displacement is increased.

Then, when the servo piston 4 is moved in the -X direction, the servo piston 4 pulls the spool 5f of the control pressure adjusting valve 5 in the -X direction via the feedback lever 7. As a result, the spool 5f of the control pressure adjusting valve 5 is switched from the tank communication position A to the shut-off position B.

As described above, in the horsepower control by the horsepower control mechanism M2, when the discharge pressure Pout of the pump P is increased, the control is performed to make the tilting angle of the swash plate 2 smaller accordingly.

As described above, in the pump device PU, while the horsepower control is being executed, the control of the tilting angle of the swash plate 2 as described above is performed as needed based on the change in the discharge pressure Pout of the pump P. Therefore, even in the event of failure of the solenoid 12, it is possible to reliably control the flow rate of the pump P and prevent the engine E from stalling.

According to the valve device 10 and the flow rate control device 100 in the first embodiment configured as described above, the following operational advantages are obtained.

In the flow rate control device 100, at the time of the normal operation state, in other words, when the solenoid 12 has not failed, the flow rate control is performed by the flow rate control mechanism M1, and in the event of failure of the solenoid 12, the horsepower control is performed by the horsepower control mechanism M2. As a result, even in the event of failure of the solenoid 12, it is possible to reliably control the flow rate of the pump P.

In addition, in the valve device 10 of the present embodiment, the electromagnetic proportional pressure reducing valve 20 and the first switching valve 30 are formed integrally, and furthermore, the valve body of the electromagnetic proportional pressure reducing valve 20 and the valve body of the first switching valve 30 are formed integrally by a single spool 13. With such a configuration, it is possible to reduce the size of the valve device 10 and to reduce cost because the number of components is decreased.

Furthermore, in the valve device 10 of the present embodiment, the input port P1 and the drain port P3 of the electromagnetic proportional pressure reducing valve 20 and the first switching valve 30 are shared. As a result, it is possible to reduce the number of ports.

In addition, in the valve device 10, in the event of failure of the solenoid 12, the output port P2 communicates with the input port P1, but not the drain port P3. Therefore, in the event of failure of the solenoid 12, when the solenoid 12 is turned ON from OFF, the output port P2 remains in communication with the input port P1. Therefore, by detecting the pressure on the output port P2 side, it is possible to determine an abnormality of the solenoid 12 at the startup of the device.

Furthermore, for example, when the valve device 10 is applied to a hydraulic shovel or the like, when a malfunction occurs in an actuator while operating an actuator such as a boom, it is possible to determine whether the solenoid 12 is abnormal based on presence or absence of a change in the pressure on the output port P2 side by switching the solenoid 12 between ON and OFF. In other words, when the pressure on the output port P2 side is changed, it can be determined that there is no abnormality in the valve device 10, and when the pressure on the output port P2 side is not changed, it can be determined that there is a possibility that the valve device 10 is stuck in an open state. As described above, the valve device 10, in which the electromagnetic proportional pressure reducing valve 20 integrally includes the first switching valve 30, can also identify whether there is an abnormality in the valve device 10 based on the change in the pressure on the output port P2 side.

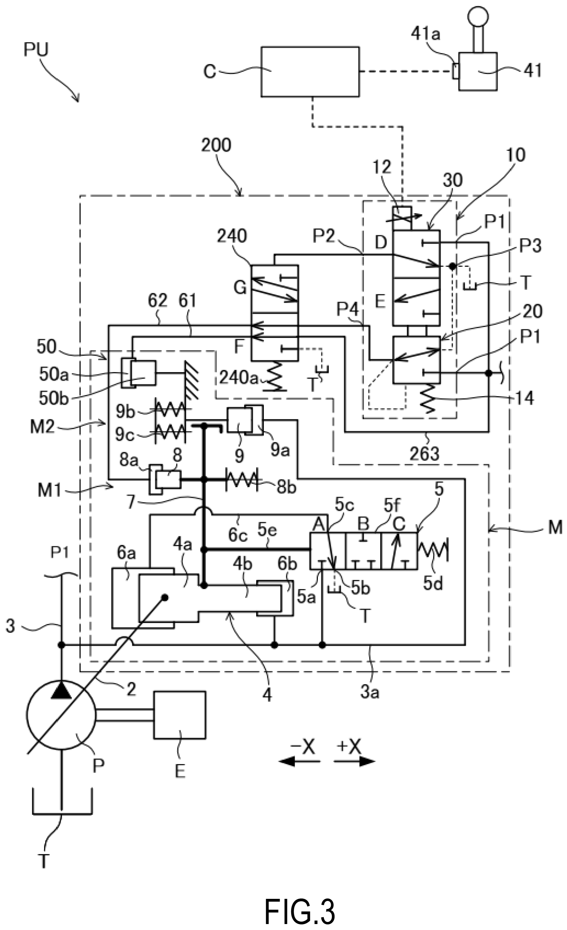

Next, with reference to FIG. 3, a flow rate control device 200 that is a modification of the flow rate control device 100 will be described.

In the flow rate control device 100 described above, the second switching valve is configured by the high pressure selection valve 40, whereas in the flow rate control device 200 of the present modification, the second switching valve is configured by a five-port switching valve 240, and thus differs from the flow rate control device 100 of the first embodiment. In the following, only points different from the flow rate control device 100 will be described, and the same components are denoted by the same reference numerals and description thereof will be omitted.

As shown in FIG. 3, the switching valve 240 is a pilot-type five-port two-position switching valve. The switching valve 240 has: a normal operation position F at which the passage 62 and the secondary pressure port P4 are communicated with each other and the passage 61 communicates with the hydraulic source through a passage 263; and a fail operation position G at which the passage 62 communicates with the hydraulic source through the passage 263 and the passage 61 communicates with the tank T.

The switching valve 240 is switched in accordance with the pressure output from the output port P2. In a state in which no pressure is output from the output port P2 (the state shown in FIG. 3), the switching valve 240 is held at the normal operation position F by the biasing force exerted by a spring 240a. When the pressure is output from the output port P2, the switching valve 240 is switched from the normal operation position F to the fail operation position G.

The operation of the flow rate control device 200 configured as described above will be described.

At the time of the normal operation state of the solenoid 12, as described above, the first switching valve 30 is switched to the normal operation position D. In the normal operation position D, because the output port P2 communicates with the tank T, the pilot pressure of the switching valve 240 is at the tank pressure, and the switching valve 240 is positioned at the normal operation position F by the biasing force exerted by the spring 240a.

As described above, at the normal operation position F, because the passage 61 communicates with the hydraulic source through the passage 263, the primary pressure is supplied to the pressure chamber 50a of the lock mechanism 50 through the passage 263, the switching valve 240, and the passage 61. As a result, the horsepower control by the horsepower control mechanism M2 is disabled.

In addition, as described above, at the normal operation position F, because the passage 62 and the secondary pressure port P4 are communicated with each other, the secondary pressure (the input pressure Pi) is supplied to the pressure chamber 8a of the flow rate control mechanism M1 through the secondary pressure port P4, the switching valve 240, and the passage 62.

As described above, in the flow rate control device 200, when the solenoid 12 is operated normally, the switching valve 240 is held at the normal operation position F, the flow rate control based on the input pressure Pi is executed.

On the other hand, in the event of failure of the solenoid 12, as described above, the biasing force exerted by the solenoid 12 is lost, and so, the first switching valve 30 is switched from the normal operation position D to the fail operation position E by the biasing force exerted by the spring 14. As a result, the input port P1 and the output port P2 are communicated with each other, and the primary pressure is supplied to the switching valve 240 as the pilot pressure through the first switching valve 30. As a result, the switching valve 240 is switched from the normal operation position F to the fail operation position G.

As described above, at the fail operation position G, because the passage 62 and the passage 263 are communicated with each other, the primary pressure is supplied to the pressure chamber 8a of the flow rate control mechanism M1 through the passage 263 and the passage 62.

In addition, as described above, at the fail operation position G, because the passage 61 communicates with the tank T, the working oil in the pressure chamber 50a of the lock mechanism 50 is discharged to the tank T through the passage 61 and the switching valve 240. As a result, the horsepower control by the horsepower control mechanism M2 is enabled.

Note that, the operations of the valve device 10 and the flow rate control unit M in the flow rate control device 200 are the same as those in the flow rate control device 100, and thus description thereof will be omitted.

The flow rate control device 200 according to the present modification can also achieve the similar operational effects as those of the flow rate control device 100.

Note that, in the flow rate control device 200, a case has been described in which the spring 240a is used to switch the switching valve 240 to the normal operation position F; however, the present invention is not limited thereto, and, for example, instead of using the spring 240a, the switching valve 240 may also be switched to the normal operation position F by the secondary pressure output from the secondary pressure port P4. Even in this case, in the event of failure of the solenoid 12, because the secondary pressure is decreased, and the primary pressure acts on the switching valve 240 as the pilot pressure, the switching valve 240 is switched to the fail operation position G.

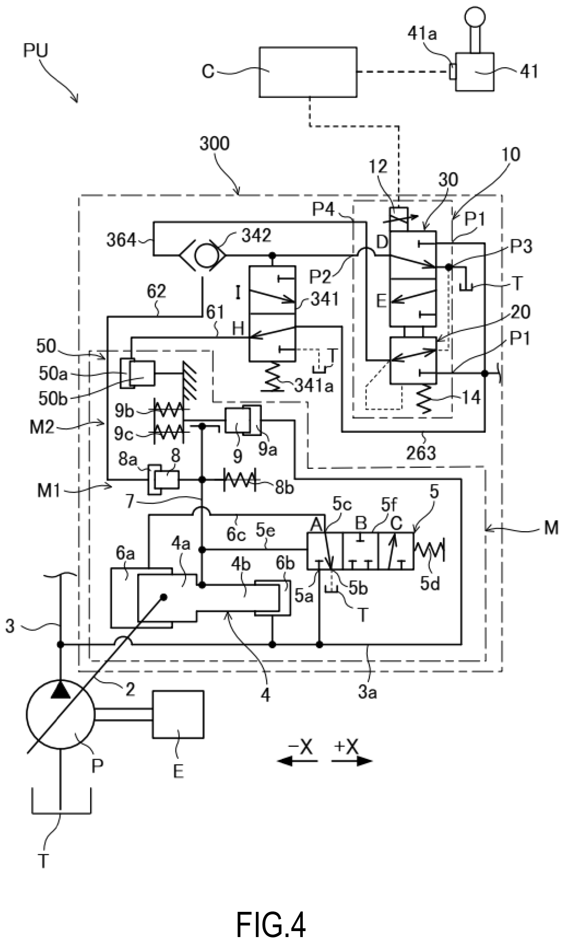

Next, with reference to FIG. 4, a flow rate control device 300 that is a modification of the flow rate control device 200 will be described.

In the flow rate control device 200, the second switching valve is configured by the five-port switching valve 240, whereas in the flow rate control device 300 of the present modification, the second switching valve is configured by a three-port switching valve 341 and a high pressure selection valve 342, and thus differs from the flow rate control device 200 of the above-described modification. In the following, only points different from the flow rate control device 100, 200 will be described, and the same components are denoted by the same reference numerals and description thereof will be omitted.

As shown in FIG. 4, the switching valve 341 is a pilot-type three-port two-position switching valve. The switching valve 341 has: a normal operation position H at which the passage 61 communicates with the hydraulic source through the passage 263; and a fail operation position I at which the passage 61 communicates with the tank T.

The switching valve 341 is switched in accordance with the pressure output from the output port P2. In a state in which no pressure is output from the output port P2 (the state shown in FIG. 4), the switching valve 341 is held at the normal operation position H by the biasing force exerted by a spring 341a. When the pressure is output from the output port P2, the switching valve 341 is switched from the normal operation position H to the fail operation position I.

The high pressure selection valve 342 outputs, to the passage 62, whichever is higher of the pressure output from the secondary pressure port P4 and the pressure output from the output port P2.

The operation of the flow rate control device 300 configured as described above will be described.

At the time of the normal operation state of the solenoid 12, as described above, the first switching valve 30 is switched to the normal operation position D. In the normal operation position D, because the output port P2 communicates with the tank T, the pilot pressure of the switching valve 341 is at the tank pressure, and the switching valve 341 is positioned at the normal operation position H by the biasing force exerted by the spring 341a.

As described above, at the normal operation position H, because the passage 61 communicates with the hydraulic source through the passage 263, the primary pressure is supplied to the pressure chamber 50a of the lock mechanism 50 through the passage 263, the switching valve 341, and the passage 263. As a result, the horsepower control by the horsepower control mechanism M2 is disabled.

In addition, at the time of the normal operation state of the solenoid 12, the secondary pressure (the input pressure Pi) is output from the secondary pressure port P4. Therefore, the secondary pressure (the input pressure Pi) is output from the high pressure selection valve 342. As a result, the secondary pressure (the input pressure Pi) is supplied to the pressure chamber 8a of the flow rate control mechanism M1 through the secondary pressure port P4, a passage 364, the high pressure selection valve 342, and the passage 62.

As described above, in the flow rate control device 300, when the solenoid 12 is operated normally, the switching valve 341 is held at the normal operation position H, and the flow rate control based on the input pressure Pi is executed by the flow rate control mechanism M1.

On the other hand, in the event of failure of the solenoid 12, as described above, the biasing force exerted by the solenoid 12 is lost, and so, the first switching valve 30 is switched from the normal operation position D to the fail operation position E by the biasing force exerted by the spring 14. As a result, the input port P1 and the output port P2 are communicated with each other, and the primary pressure is supplied to the switching valve 341 as the pilot pressure through the first switching valve 30. As a result, the switching valve 341 is switched from the normal operation position H to the fail operation position I.

In the event of failure of the solenoid 12 and when the first switching valve 30 is switched from the normal operation position D to the fail operation position E, the input port P1 and the output port P2 are communicated with each other, and the primary pressure is supplied from the output port P2 to the passage 364. In addition, in the event of failure of the solenoid 12, the pressure output from the secondary pressure port P4 of the electromagnetic proportional pressure reducing valve 20 is decreased. Therefore, the primary pressure that has been supplied from the output port P2 to the passage 364 is output from the high pressure selection valve 342. As a result, the primary pressure is supplied to the pressure chamber 8a of the flow rate control mechanism M1 through the passage 263 and the passage 62.

In addition, as described above, at the fail operation position I, because the passage 61 communicates with the tank T, the working oil in the pressure chamber 50a of the lock mechanism 50 is discharged to the tank T through the passage 61 and the switching valve 240. As a result, the horsepower control by the horsepower control mechanism M2 is enabled.

Note that, the operations of the valve device 10 and the flow rate control unit M in the flow rate control device 300 are the same as those in the flow rate control device 100, 200, and thus description thereof will be omitted.

The flow rate control device 300 according to the present modification can also achieve the similar operational effects as those of the flow rate control device 100, 200.

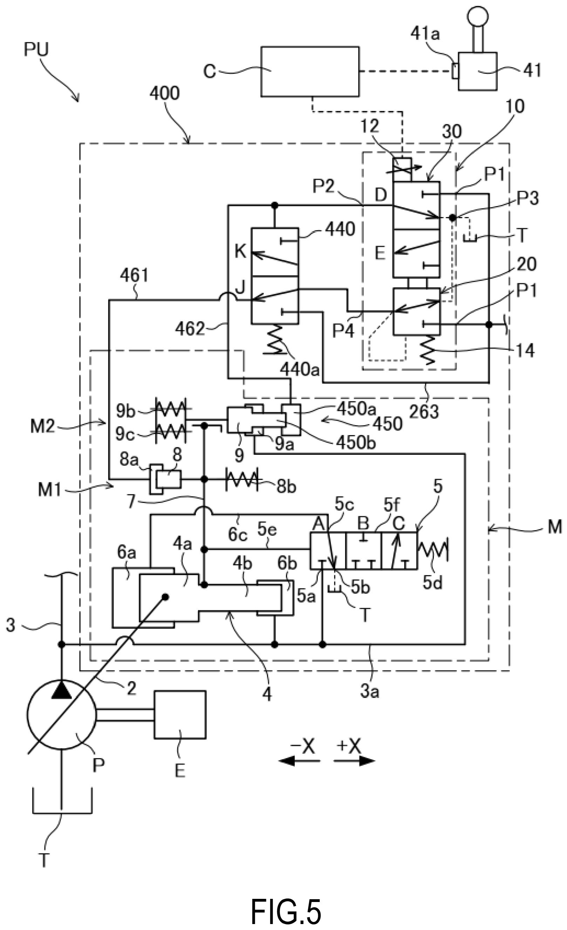

Next, with reference to FIG. 5, a flow rate control device 400 that is a modification of the flow rate control device 300 will be described.

In the flow rate control device 300, the second switching valve is configured by the three-port switching valve 341 and the high pressure selection valve 342, whereas in the flow rate control device 400 of the present modification, the second switching valve is configured by a three-port switching valve 440 only, and thus differs from the flow rate control device 300 of the above-described modification. In addition, in the flow rate control device 400 of the present modification, a lock pin 450b of a lock mechanism 450 is integrally configured with the horsepower control spool 9, and thus differs from the flow rate control device 300 of the above-described modification. In the following, only points different from the flow rate control device 100, 200, 300 will be described, and the same components are denoted by the same reference numerals and description thereof will be omitted.

As shown in FIG. 5, the switching valve 440 is a pilot-type three-port two-position switching valve. The switching valve 440 has: a normal operation position J at which a passage 461 communicates with the secondary pressure port P4; and a fail operation position K at which the passage 461 communicates with the hydraulic source through the passage 263.

The switching valve 440 is switched in accordance with the pressure output from the output port P2. In a state in which no pressure is output from the output port P2 (the state shown in FIG. 5), the switching valve 440 is held at the normal operation position J by the biasing force exerted by a spring 440a. When the pressure is output from the output port P2, the switching valve 440 is switched from the normal operation position J to the fail operation position K.

As shown in FIG. 5, in the flow rate control device 400, the lock mechanism 450 has: a pressure chamber 450a that communicates with the output port P2 through a passage 462; and the lock pin 450b that has the first end surface facing the pressure chamber 450a and that is displaced in accordance with the pressure of the working oil guided to the pressure chamber 450a.

In the present modification, the lock pin 450b is formed to have a smaller diameter than that of the horsepower control spool 9 and is formed integrally with the horsepower control spool 9.

In the flow rate control device 400 of the present modification, when the pressure acting on the lock pin 450b is equal to or less than a predetermined value, the horsepower control by the horsepower control mechanism M2 is disabled, and when the pressure acting on the lock pin 450b is greater than the predetermined value, the horsepower control by the horsepower control mechanism M2 is enabled.

Specifically, the biasing force exerted by the springs 9b and 9c is set so as to be larger than the biasing force that is generated when the maximum discharge pressure Poutmax acts on the horsepower control spool 9 and so as to be smaller than the biasing force that is generated when the primary pressure acts on the lock pin 450b. As a result, when no pressure is supplied to the pressure chamber 450a, in other words, when no biasing force is acting on the lock pin 450b, the horsepower control spool 9 is not displaced. In other words, the horsepower control is disabled.

On the other hand, when the primary pressure (the pressure of the hydraulic pressure source) is supplied to the pressure chamber 450a, the total of the biasing force acting on the horsepower control spool 9 and the biasing force acting on the lock pin 450b becomes greater than the biasing force exerted by the springs 9b and 9c, and thus, the horsepower control spool 9 can be displaced in accordance with the pressure supplied to the pressure chamber 9a. In other words, the horsepower control is enabled.

The operation of the flow rate control device 400 configured as described above will be described.

At the time of the normal operation state of the solenoid 12, as described above, the first switching valve 30 is switched to the normal operation position D. In the normal operation position D, because the output port P2 communicates with the tank T, the pilot pressure of the switching valve 440 is at the tank pressure, and the switching valve 440 is positioned at the normal operation position J by the biasing force exerted by the spring 440a.

In addition, when the first switching valve 30 is positioned at the normal operation position D, the pressure chamber 450a of the lock mechanism 450 communicates with the tank T through the passage 462 and the first switching valve 30. Therefore, the horsepower control by the horsepower control mechanism M2 is disabled.

When the switching valve 440 is positioned at the normal operation position J, because the passage 461 communicates with the secondary pressure port P4, the secondary pressure (the input pressure Pi) is supplied to the pressure chamber 8a of the flow rate control mechanism M1 through the secondary pressure port P4, the switching valve 440, and the passage 461.

As described above, in the flow rate control device 400, when the solenoid 12 is operated normally, the switching valve 440 is held at the normal operation position J, and the flow rate control based on the input pressure Pi is executed by the flow rate control mechanism M1.

On the other hand, in the event of failure of the solenoid 12, as described above, the biasing force exerted by the solenoid 12 is lost, and so, the first switching valve 30 is switched from the normal operation position D to the fail operation position E by the biasing force exerted by the spring 14. As a result, the input port P1 and the output port P2 are communicated with each other, and the primary pressure is supplied to the switching valve 440 as the pilot pressure through the first switching valve 30. As a result, the switching valve 440 is switched from the normal operation position J to the fail operation position K.

As described above, at the fail operation position K, because the passage 461 communicates with the hydraulic source through the passage 263, the primary pressure is supplied to the pressure chamber 8a of the flow rate control mechanism M1 through the passage 263 and the passage 461.

In addition, as described above, when the first switching valve 30 is switched from the normal operation position D to the fail operation position E, the primary pressure is supplied to the pressure chamber 450a of the lock mechanism 450 through the output port P2 of the first switching valve 30 and the passage 462. As a result, the horsepower control by the horsepower control mechanism M2 is enabled.

Note that, the operations of the valve device 10 and the flow rate control unit M in the flow rate control device 400 are the same as those in the flow rate control device 100, 200, 300, and thus description thereof will be omitted.

The flow rate control device 400 according to the present modification can also achieve the similar operational effects as those of the flow rate control device 100, 200, 300. In addition, in the flow rate control device 400, compared to the flow rate control device 300, because the high pressure selection valve 342 is not used, the number of components can be reduced accordingly.

### <Second Embodiment>

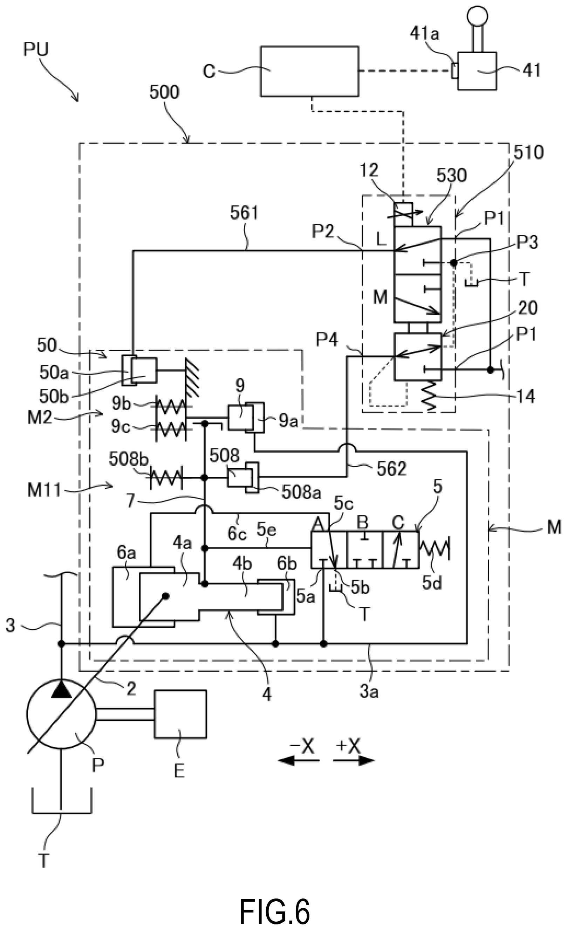

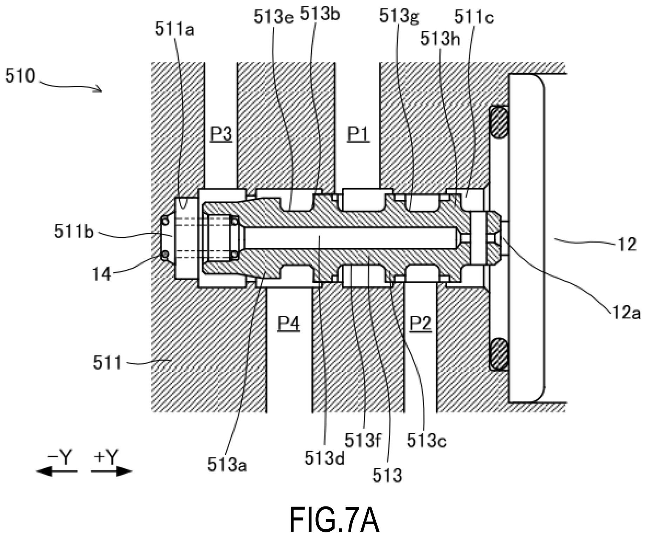

A valve device 510 according to a second embodiment and a flow rate control device 500 including the valve device 510 will be described with reference to FIGs. 6 and 7A to 7C.

In the flow rate control device 100 according to the first embodiment, in the flow rate control, when the input pressure Pi input to the flow rate control mechanism M1 is increased, the tilting angle (the pump displacement) of the swash plate 2 is increased; however, in the flow rate control device 500 according to the second embodiment, in the flow rate control, when the input pressure Pi input to a flow rate control mechanism M11 is increased, the tilting angle (the pump displacement) of the swash plate 2 is decreased, and thus differs from the flow rate control device 100 of the first embodiment.

In addition, in the valve device 10 according to the first embodiment, in the event of failure of the solenoid 12, the input port P1 and the output port P2 are communicated with each other, whereas in the valve device 510 according to the second embodiment, in the event of failure of the solenoid 12, the output port P2 and the drain port P3 are communicated with each other, and thus differs from the valve device 10 of the first embodiment.

In the following, only points different from the first embodiment and its modifications will be described, and the same components are denoted by the same reference numerals and description thereof will be omitted.

As shown in FIG. 6, the flow rate control mechanism M11 in the flow rate control device 500 has: a pressure chamber 508a to which the input pressure Pi from the electromagnetic proportional pressure reducing valve 20 is guided; a flow rate control spool 508 that has the first end surface facing the pressure chamber 508a and that is displaced in accordance with the input pressure Pi; and a spring 508b that biases the flow rate control spool 508 in the direction opposite to the direction of the biasing force applied by the input pressure Pi guided to the pressure chamber 508a.

The position of the flow rate control spool 508 is set by a balance between the biasing force that is applied by the input pressure Pi guided to the pressure chamber 508a and that pushes the flow rate control spool 508 in the -X direction shown in FIG. 6 and the biasing force that is exerted by the spring 508b and that pushes the flow rate control spool 508 in the +X direction shown in FIG. 6. When the input pressure Pi is lower than a predetermined pressure, the flow rate control spool 508 is positioned at the initial position by the biasing force exerted by the spring 508b, and is moved in the -X direction as the input pressure Pi becomes higher than the predetermined pressure.

In the flow rate control mechanism M11 configured as described above, as the input pressure Pi becomes higher than the predetermined pressure, the flow rate control spool 508 is moved in the -X direction, and thus, the feedback lever 7 is pushed in the -X direction by the flow rate control spool 508. As described above, because the spool 5f of the control pressure adjusting valve 5 is linked to the feedback lever 7, as the feedback lever 7 is pushed in the -X direction by the flow rate control spool 8, the spool 5f of the control pressure adjusting valve 5 is switched from the shut-off position B to the pump communication position C. At the pump communication position C, because the pump port 5a and the control pressure port 5c are communicated with each other, the discharge pressure Pout is supplied to the large-diameter side chamber 6a, and the biasing force that biases the servo piston 4 in the +X direction is increased. As a result, the servo piston 4 is moved in the +X direction, and the tilting angle of the swash plate 2 is reduced. In other words, the pump displacement is decreased.

On the other hand, in the flow rate control mechanism M11, as the input pressure Pi is decreased, the flow rate control spool 508 is moved in the +X direction, and thus, the feedback lever 7 is pushed in the +X direction. As described above, because the spool 5f of the control pressure adjusting valve 5 is linked to the feedback lever 7, as the feedback lever 7 is pushed in the +X direction by the flow rate control spool 8, the spool 5f of the control pressure adjusting valve 5 is switched from the shut-off position B to the tank communication position A. At the tank communication position A, because the tank port 5b and the control pressure port 5c are communicated with each other, the working oil in the large-diameter side chamber 6a is discharged, and the biasing force that biases the servo piston 4 in the +X direction is decreased. As a result, the servo piston 4 is moved in the -X direction, and the tilting angle of the swash plate 2 is increased. In other words, the pump displacement is increased.

As described above, in the flow rate control device 500, as the secondary pressure (the input pressure Pin) from the electromagnetic proportional pressure reducing valve 20 is increased, the pump displacement of the pump P is reduced, and as the secondary pressure (the input pressure Pin) from the electromagnetic proportional pressure reducing valve 20 is decreased, the pump displacement of the pump P is increased.

Next, the valve device 510 will be described.

As shown in FIG. 6, the valve device 510 includes: the solenoid 12; the electromagnetic proportional pressure reducing valve 20 that reduces the primary pressure and adjusts the primary pressure to the secondary pressure in accordance with the command current applied to the solenoid 12; a first switching valve 530 that is switched to a normal operation position L or a fail operation position M in accordance with the biasing force generated by the solenoid 12.

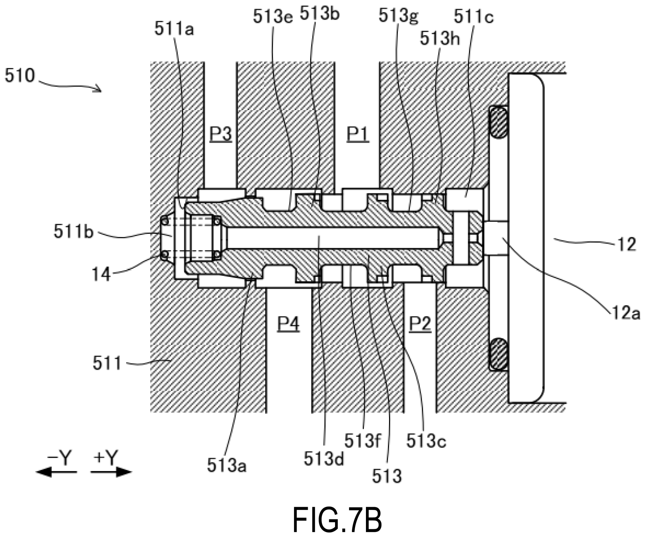

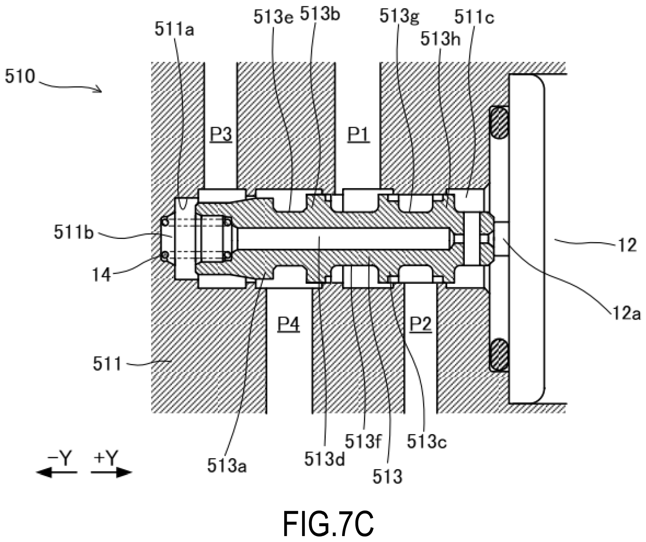

A specific configuration of the valve device 510 will be described with reference to FIGs. 6 and 7A to 7C FIG. 7A is a sectional view showing a main relevant part of the valve device 510 in a non-energized state of the solenoid 12. FIG. 7B is a sectional view showing the main relevant part of the valve device 510 in an energized state of the solenoid 12. FIG. 7C is a sectional view showing the main relevant part of the valve device 10 in a state in which the electromagnetic proportional pressure reducing valve 20 has reached a set pressure.

As shown in FIGs. 7A, 7B, and 7C, the valve device 510 includes a housing 511, the solenoid 12, a spool 513 serving as the valve body, and the spring 14.

The housing 511 is formed with a bottomed accommodation hole 511a that slidably accommodates the spool 513. The spring 14 that biases the spool 513 in the +Y direction is provided on the first end surface side of the spool 513. The solenoid 12 that biases the spool 513 in the -Y direction is provided on the second end surface side of the spool 513.

The housing 511 further includes: the input port P1 to which the primary pressure (the working fluid from the hydraulic pressure source) is guided; the output port P2; the drain port P3 that communicates with the tank T; and the secondary pressure port P4 from which the secondary pressure, which has been adjusted by reducing the primary pressure, is output (see also FIG. 6).

The spool 513 is biased in the +Y direction by the biasing force exerted by the spring 14 and is pressed against the plunger 12a of the solenoid 12. In other words, the plunger 12a of the solenoid 12 and the second end surface of the spool 513 are in a state in which they are always in contact with each other. Therefore, the position of the spool 513 is changed when the current applied to the solenoid 12 is changed and the plunger 12a moves.

As shown in FIGs. 7A, 7B, and 7C, the spool 513 includes: a first land portion 513a; a second land portion 513b; a third land portion 513c; a fourth land portion 513h; a communication passage 513d that extends in the axial direction of the spool 513 and that communicates a space 511b facing the first end surface of the spool 513 with a space 511c facing the second end surface of the spool 513; a first annular groove 513e that is formed between the first land portion 513a and the second land portion 513b; a second annular groove 513f that is formed between the second land portion 513b and the third land portion 513c; and a third annular groove 513g that is formed between the third land portion 513c and the fourth land portion 513h.

The first land portion 513a, the second land portion 513b, the third land portion 513c, and the fourth land portion 513h are provided at intervals in the axial direction in this order from the spring 14 side. The first land portion 513a is formed to have a tapered shape whose diameter is reduced toward the first end surface side (toward the spring 14 side) of the spool 513. The outer diameter of a portion of the first land portion 513a that faces the second land portion 513b across the first annular groove 513e is smaller than the outer diameter of the second land portion 513b, and the second land portion 513b, the third land portion 513c, and the fourth land portion 513h are formed to have the same outer diameter.

The first land portion 513a controls the communication between the secondary pressure port P4 and the drain port P3. The second land portion 513b controls the communication between the input port P1 and the secondary pressure port P4. The third land portion 513c controls the communication between the input port P1 and the output port P2. The fourth land portion 513h controls the communication between the output port P2 and the drain port P3.

The space 511b is formed as a space that accommodates the spring 14 in the accommodation hole 511a. The space 511b is always in communication with the drain port P3.

The space 511c is provided on the solenoid 12 side of the accommodation hole 511a and is defined by the housing 511, the solenoid 12, and the spool 513 (the fourth land portion 513h). The space 511c is always in communication with the drain port P3 through the communication passage 513d.

In the present embodiment, the solenoid 12, the spring 14, the input port P1, the secondary pressure port P4, the drain port P3, the first land portion 513a of the spool 513, and the second land portion 513b of the spool 513 constitute the electromagnetic proportional pressure reducing valve 20. In addition, the solenoid 12, the spring 14, the input port P1, the output port P2, the drain port P3, the third land portion 513c of the spool 513, and the fourth land portion 513h constitute the first switching valve 530. In other words, in the valve device 510 of the present embodiment, the electromagnetic proportional pressure reducing valve 20 and the first switching valve 530 are formed integrally, and the valve body of the electromagnetic proportional pressure reducing valve 20 and the valve body of the first switching valve 530 are formed integrally by a single spool 513. Furthermore, the electromagnetic proportional pressure reducing valve 20 and the first switching valve 530 are controlled by a single solenoid 12.

The operation of the valve device 510 configured as described above will be described.

In a state in which no current is applied to the solenoid 12, the spool 513 is positioned at the position shown in FIG. 7A. Specifically, the secondary pressure port P4 and the drain port P3 are communicated with each other, and the communication between the input port P1 and the secondary pressure port P4 is shut off by the second land portion 513b. Furthermore, the communication between the input port P1 and the output port P2 is shut off by the third land portion 513c, and the output port P2 and the drain port P3 are communicated with each other. At the position shown in FIG. 7A, because the output port P2 and the drain port P3 are communicated with each other, the pressure in the pressure chamber 50a of the lock mechanism 50 is at the tank pressure (see also FIG. 6).

When the operation lever 41 is operated and the command current is applied to the solenoid 12 from the controller C, the biasing force exerted by the solenoid 12 exceeds the biasing force exerted by the spring 14, and the spool 513 is moved from the position shown in FIG. 7A to the position shown in FIG. 7B (in the -Y direction). As a result, the input port P1 and the secondary pressure port P4 are communicated with each other, and the input port P1 and the output port P2 are communicated with each other. In addition, a state in which the communication between the secondary pressure port P4 and the drain port P3 is shut off by the first land portion 513a is established.

As the input port P1 and the output port P2 are communicated with each other, the working oil from the hydraulic source is supplied to the output port P2. The working oil in the output port P2 is supplied to the pressure chamber 50a of the lock mechanism 50 through a passage 561 (see also FIG. 6). As a result, the horsepower control by the horsepower control mechanism M2 is disabled.

In addition, as the input port P1 and the secondary pressure port P4 are communicated with each other, the working oil from the hydraulic source is supplied to the secondary pressure port P4, and the pressure in the secondary pressure port P4 is increased. As shown in FIG. 6, the working oil in the secondary pressure port P4 is guided to the pressure chamber 508a of the flow rate control mechanism M1 through a passage 562.

As described above, the outer diameter of the portion of the first land portion 513a that faces the second land portion 513b across the first annular groove 513e is smaller than the outer diameter of the second land portion 513b. Therefore, when the secondary pressure acts on these portions, the biasing force in the +Y direction (in the rightward direction) in FIG. 7B acts on the spool 513 due to the difference in the pressure receiving areas of these portions. This biasing force biases the spool 513 so as to oppose the biasing force exerted by the solenoid 12. In other words, also in the valve device 510, the pressure acting due to the difference in the pressure receiving areas between the first land portion 513a and the second land portion 513b corresponds to the feedback pressure in the electromagnetic proportional pressure reducing valve 20. Note that the configuration related to the difference in the pressure receiving areas between the first land portion 513a and the second land portion 513b corresponds to the "feedback portion" described in the Scope of Claims.

When the secondary pressure is increased, the biasing force that biases the spool 513 in the +Y direction by the secondary pressure (the feedback pressure) is increased, and the spool 513 is moved in the +Y direction (in the rightward direction) in FIG. 7B. As a result, the supply of the working oil from the input port P1 to the secondary pressure port P4 is reduced. Then, when the spool 513 is moved to the position (the position shown in FIG. 7C) at which a total biasing force of the biasing force in the +Y direction by the feedback pressure acting on the spool 513 and the biasing force in the +Y direction exerted by the spring 14 is balanced with the biasing force in the -Y direction exerted by the solenoid 12, the communication between the input port P1 and the secondary pressure port P4 is shut off by the second land portion 513b. Note that, in the state shown in FIG. 7C, the input port P1 and the output port P2 are held at a state in which they are communicated with each other.

As shown in FIG. 6, the first switching valve 530 has the normal operation position L (corresponding to the positions shown in FIGs. 7B and 7C) and the fail operation position M (corresponding to the position shown in FIG. 7A). At the normal operation position L, the input port P1 and the output port P2 are communicated with each other, and the communication between the output port P2 and the drain port P3 is shut off. At the fail operation position M, the output port P2 and the drain port P3 are communicated with each other, and the communication between the input port P1 and the output port P2 is shut off.

In the present embodiment, even when the operation lever 41 is not operated, in a state in which the pump device PU is under operation, the minimum command current is applied to the solenoid 12. In a state in which the minimum command current is applied to the solenoid 12 of the valve device 510, the first switching valve 530 is switched to the normal operation position L. Therefore, in a state in which the pump device PU is under operation, the first switching valve 530 is held at the normal operation position L regardless of whether the operation lever 41 is operated or not. As a result, the output port P2 is maintained at the drain pressure.

In the event of failure of the solenoid 12, the biasing force exerted by the solenoid 12 is lost, and so, the first switching valve 530 is switched from the normal operation position L to the fail operation position M by the biasing force exerted by the spring 14. As a result, the output port P2 and the drain port P3 are communicated with each other, and so, the pressure in the output port P2 becomes the tank pressure. As a result, the horsepower control by the horsepower control mechanism M2 is enabled.

Note that, in the event of failure of the solenoid 12, because the secondary pressure output from the electromagnetic proportional pressure reducing valve 20 is decreased, the pressure in the pressure chamber 508a of the flow rate control mechanism M11 is decreased. As a result, the flow rate control mechanism M11 is brought into the state of requesting the maximum discharge flow rate from the pump P.

Note that, the operations of the flow rate control unit M of the flow rate control device 500, other than the flow rate control mechanism M11, are the same as those in the flow rate control devices 100, 200, 300, and 400, and thus description thereof will be omitted.

According to the valve device 510 and the flow rate control device 500 in the second embodiment configured as described above, the following operational advantages are obtained.

In the flow rate control device 500, at the time of the normal operation state, in other words, when the solenoid 12 has not failed, the flow rate control is performed by the flow rate control mechanism M11, and in the event of failure of the solenoid 12, the horsepower control is performed by the horsepower control mechanism M2. As a result, even in the event of failure of the solenoid 12, it is possible to reliably control the flow rate of the pump P.

In addition, in the valve device 510 of the present embodiment, the electromagnetic proportional pressure reducing valve 20 and the first switching valve 530 are formed integrally, and furthermore, the valve body of the electromagnetic proportional pressure reducing valve 20 and the valve body of the first switching valve 530 are formed integrally by a single spool 13. With such a configuration, it is possible to reduce the size of the valve device 510 and to reduce cost because the number of components is decreased.

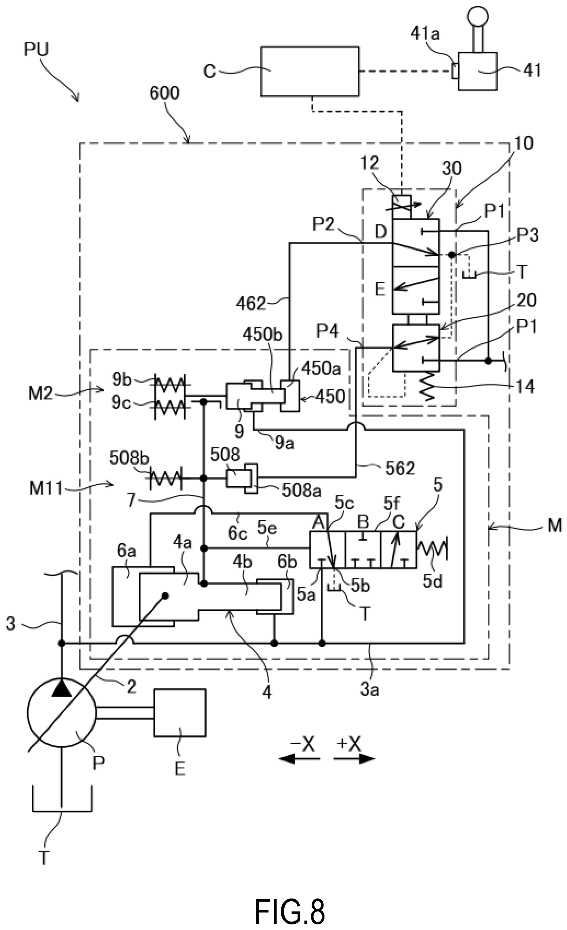

Next, with reference to FIG. 8, a flow rate control device 600 that is a modification of the flow rate control device 500 will be described.

The flow rate control device 500 described above includes the valve device 510, whereas the flow rate control device 600 of the present modification includes the valve device 10 of the first embodiment, and thus differs from the flow rate control device 500. In addition, the flow rate control device 500 described above includes the lock mechanism 50, whereas the flow rate control device 600 of the present modification includes the lock mechanism 450 of the flow rate control device 400 which is the modification of the first embodiment, and thus differs from the flow rate control device 500. In the following, only points different from other embodiments will be described, and the same components are denoted by the same reference numerals and description thereof will be omitted. Note that, the configurations and operations of the valve device 10 and the lock mechanism 450 have also been described in the above-described embodiment and modifications, and thus description thereof will be omitted here.

In the following, the operation of the flow rate control device 600 will be described.

At the time of the normal operation state of the solenoid 12, as described above, the first switching valve 30 is switched to the normal operation position D. In the normal operation position D, because the output port P2 communicates with the tank T, the pressure chamber 450a of the lock mechanism 450 communicates with the tank T through the passage 462 and the first switching valve 30. Therefore, the horsepower control by the horsepower control mechanism M2 is disabled.

In addition, the secondary pressure (the input pressure Pi) is supplied to the pressure chamber 508a of the flow rate control mechanism M11 from the secondary pressure port P4 of the electromagnetic proportional pressure reducing valve 20 through the passage 562. As a result, the flow rate control by the flow rate control mechanism M11 is executed.

On the other hand, in the event of failure of the solenoid 12, the biasing force exerted by the solenoid 12 is lost, and so, the first switching valve 30 is switched from the normal operation position D to the fail operation position E by the biasing force exerted by the spring 14. When the first switching valve 30 is switched from the normal operation position D to the fail operation position E, the primary pressure is supplied to the pressure chamber 450a of the lock mechanism 450 through the output port P2 of the first switching valve 30 and the passage 462. As a result, the horsepower control by the horsepower control mechanism M2 is enabled.

Note that, in the event of failure of the solenoid 12, because the secondary pressure output from the electromagnetic proportional pressure reducing valve 20 is decreased, the pressure in the pressure chamber 8a of the flow rate control mechanism M1 is decreased. As a result, the flow rate control mechanism M11 is brought into the state of requesting the maximum discharge flow rate from the pump P.

Other operations of the flow rate control unit M of the flow rate control device 600 are the same as those in the flow rate control device 500, and thus description thereof will be omitted.

The flow rate control device 600 according to the above modification can also achieve the same operational effects as those of the flow rate control device 500.

### <Third Embodiment>

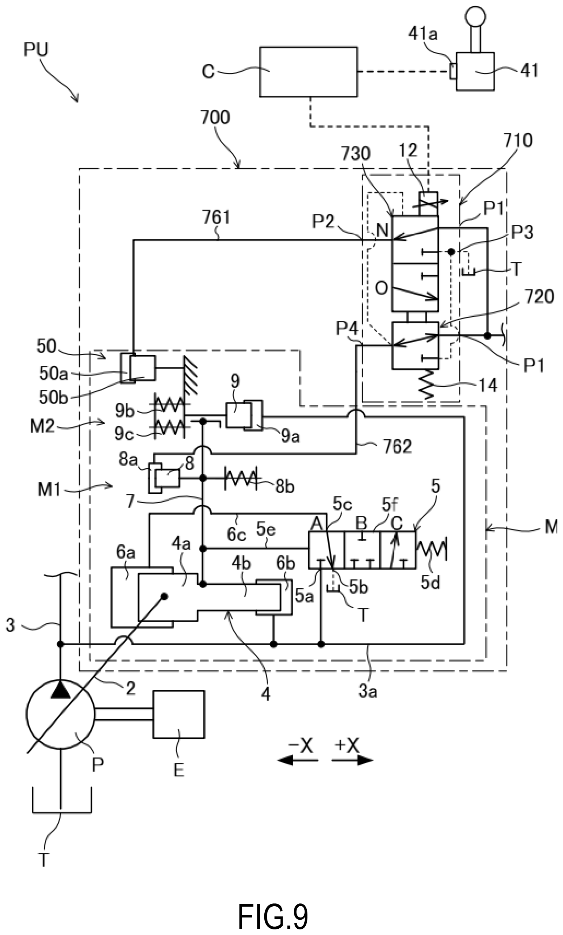

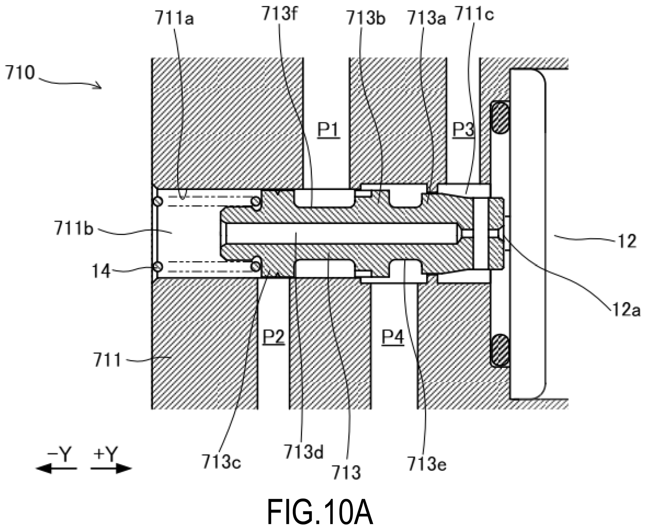

A valve device 710 according to a third embodiment and a flow rate control device 700 including the valve device 710 will be described with reference to FIGs. 9 and 10A to 10C.

The flow rate control device 100 according to the first embodiment includes the direct proportional type electromagnetic proportional pressure reducing valve 20 and the first switching valve 30, whereas the flow rate control device 700 according to the third embodiment includes an inverse proportional type electromagnetic proportional pressure reducing valve 720 and a first switching valve 730, and thus differs from the valve device 10 of the first embodiment.

In the following, only points different from the valve device 10 and the flow rate control device 100 will be described, and the same components are denoted by the same reference numerals and description thereof will be omitted.

As shown in FIG. 9, the valve device 710 includes: the solenoid 12; the electromagnetic proportional pressure reducing valve 720 that reduces the primary pressure and adjusts the primary pressure to the secondary pressure in accordance with the command current applied to the solenoid 12; the first switching valve 730 that is switched to a normal operation position N or a fail operation position O in accordance with the biasing force generated by the solenoid 12.

The electromagnetic proportional pressure reducing valve 720 according to the present embodiment is an inverse proportional type electromagnetic proportional pressure reducing valve that outputs a smaller secondary pressure as the command current applied to the solenoid 12 is increased.

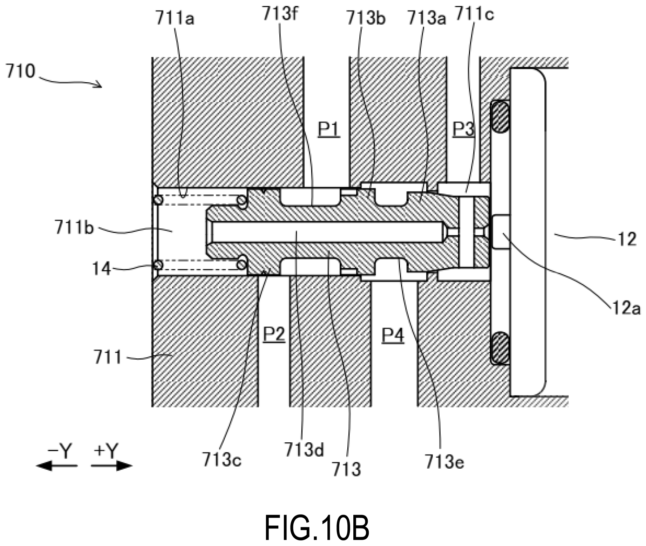

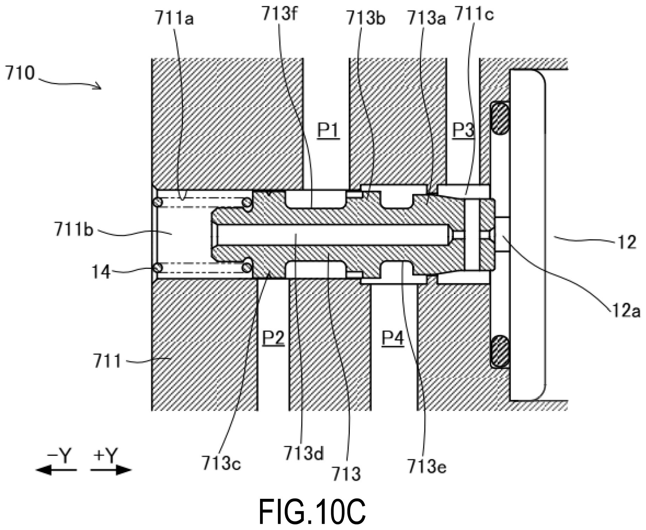

A specific configuration of the valve device 710 will be described with reference to FIGs. 9 and 10A to 10C.. FIG. 10A is a sectional view showing a main relevant part of the valve device 710 in a non-energized state of the solenoid 12. FIG. 10B is a sectional view showing the main relevant part of the valve device 710 in an energized state of the solenoid 12. FIG. 10C is a sectional view showing the main relevant part of the valve device 710 in a state in which the electromagnetic proportional pressure reducing valve 720 has reached a set pressure.

As shown in FIGs. 10A, 10B, and 10C, the valve device 710 includes a housing 711, the solenoid 12, a spool 713 serving as the valve body, and the spring 14.

The housing 711 is formed with a cylindrical accommodation hole 711a that slidably accommodates the spool 713. The spring 14 that biases the spool 713 in the +Y direction is provided on the first end surface side of the spool 713. The solenoid 12 that biases the spool 713 in the -Y direction is provided on the second end surface side of the spool 713.

The housing 711 further includes: the input port P1 to which the primary pressure (the working fluid from the hydraulic pressure source) is guided; the output port P2; the drain port P3 that communicates with the tank T; and the secondary pressure port P4 from which the secondary pressure, which has been adjusted by reducing the primary pressure, is output (see also FIG. 9).

The spool 713 is biased in the +Y direction by the biasing force exerted by the spring 14 and is pressed against the plunger 12a of the solenoid 12. In other words, the plunger 12a of the solenoid 12 and the second end surface of the spool 713 are in a state in which they are always in contact with each other. Therefore, the position of the spool 713 is changed when the current applied to the solenoid 12 is changed and the plunger 12a moves.

As shown in FIGs. 10A, 10B, and 10C, the spool 713 includes: a first land portion 713a; a second land portion 713b; a third land portion 713c; a communication passage 713d that extends in the axial direction of the spool 713 and that communicates a space 711b facing the first end surface of the spool 713 with a space 711c facing the second end surface of the spool 713; a first annular groove 713e that is formed between the first land portion 713a and the second land portion 713b; and a second annular groove 713f that is formed between the second land portion 713b and the third land portion 713c.

The first land portion 713a, the second land portion 713b, and the third land portion 713c are provided at intervals in the axial direction in this order from the solenoid 12 side. The first land portion 713a is formed to have a tapered shape whose diameter is reduced toward the second end surface side (toward the solenoid 12 side) of the spool 713. The outer diameter of a portion of the first land portion 713a that faces the second land portion 713b across the first annular groove 713e is smaller than the outer diameter of the second land portion 713b, and the second land portion 713b and the third land portion 713c are formed to have the same outer diameter.

The first land portion 713a controls the communication between the secondary pressure port P4 and the drain port P3. The second land portion 713b controls the communication between the input port P1 and the secondary pressure port P4. The third land portion 713c controls the communication between the input port P1 and the output port P2, and the communication between the output port P2 and the drain port P3.

The space 711b is formed as a space that accommodates the spring 14 in the accommodation hole 711a. The space 711b is always in communication with the drain port P3 through the communication passage 713d.

The space 711c is provided on the solenoid 12 side of the accommodation hole 711a and is defined by the housing 711, the solenoid 12, and the spool 713 (the first land portion 713a). The space 711c is always in communication with the drain port P3.

In the present embodiment, the solenoid 12, the spring 14, the input port P1, the secondary pressure port P4, the drain port P3, the first land portion 713a of the spool 713, and the second land portion 713b of the spool 713 constitute the electromagnetic proportional pressure reducing valve 720. In addition, the solenoid 12, the spring 14, the input port P1, the output port P2, the drain port P3, and the third land portion 713c of the spool 713 constitute the first switching valve 730. In other words, in the valve device 710 of the present embodiment, the electromagnetic proportional pressure reducing valve 720 and the first switching valve 730 are formed integrally, and the valve body of the electromagnetic proportional pressure reducing valve 720 and the valve body of the first switching valve 730 are formed integrally by a single spool 713. Furthermore, the electromagnetic proportional pressure reducing valve 720 and the first switching valve 730 are controlled by a single solenoid 12.

The operation of the valve device 710 configured as described above will be described.

In a state in which no current is applied to the solenoid 12, the spool 713 is positioned at the position shown in FIG. 10A. Specifically, the communication between the secondary pressure port P4 and the drain port P3 is shut off by the first land portion 713a, and the input port P1 and the secondary pressure port P4 are communicated with each other. In this state, the pressure of the secondary pressure port P4 is equal to the primary pressure (the pressure in the input port P1). Furthermore, the communication between the input port P1 and the output port P2 is shut off by the third land portion 713c, and the output port P2 and the drain port P3 are communicated with each other. At the position shown in FIG. 10A, because the input port P1 and the secondary pressure port P4 are communicated with each other, the working oil from the hydraulic source is supplied to the pressure chamber 8a of the flow rate control mechanism M1 through the input port P1, the secondary pressure port P4, and a passage 762 (see also FIG. 9). In addition, at the position shown in FIG. 10A, because the output port P2 and the drain port P3 are communicated with each other, the pressure in the pressure chamber 50a of the lock mechanism 50 is at the tank pressure (see also FIG. 9).

As described above, the outer diameter of a portion of the first land portion 713a that faces the second land portion 713b across the first annular groove 713e in the spool 713 is smaller than the outer diameter of the second land portion 713b. Therefore, when the secondary pressure acts on these portions, the biasing force in the -Y direction (in the leftward direction) in FIG. 10A acts on the spool 713 due to the difference in the pressure receiving areas of these portions. This biasing force biases the spool 713 so as to oppose the biasing force exerted by the spring 14. In other words, the pressure acting due to the difference in the pressure receiving areas between the first land portion 713a and the second land portion 713b corresponds to the feedback pressure in the electromagnetic proportional pressure reducing valve 720. Note that the configuration related to the difference in the pressure receiving areas between the first land portion 713a and the second land portion 713b corresponds to the "feedback portion" described in the Scope of Claims.

In the valve device 710, the spring load of the spring 14 is set such that, in a state in which no current is applied to the solenoid 12, the biasing force in the +Y direction exerted by the spring 14 exceeds the biasing force in the -Y direction by the feedback pressure. As a result, in the state in which no current is applied to the solenoid 12, the spool 713 is held at the position shown in FIG. 10A.

When the operation lever 41 is operated and the command current is applied to the solenoid 12 from the controller C, the total of the biasing force exerted by the solenoid 12 and the biasing force by the feedback pressure exceeds the biasing force exerted by the spring 14, and the spool 713 is moved from the position shown in FIG. 10A to the position shown in FIG. 10B (in the -Y direction). As a result, the communication between the input port P1 and the secondary pressure port P4 is shut off, and the secondary pressure port P4 and the drain port P3 are communicated with each other. In addition, the input port P1 and the output port P2 are communicated with each other, and the communication between the output port P2 and the drain port P3 is shut off by the third land portion 713c.

As the secondary pressure port P4 and the drain port P3 are communicated with each other, the working oil in the pressure chamber 8a, the passage 762, and the secondary pressure port P4 is discharged to the tank T, and the pressure of the secondary pressure port P4 is decreased. In addition, as the input port P1 and the output port P2 are communicated with each other, the working oil in the input port P1 is supplied to the pressure chamber 50a of the lock mechanism 50 through the output port P2 and a passage 761. As a result, the horsepower control by the horsepower control mechanism M2 is disabled.

When the pressure in the secondary pressure port P4 is decreased and when the spool 713 is moved to the position (the position shown in FIG. 10C) at which a total biasing force of the biasing force in the -Y direction by the feedback pressure acting on the spool 713 and the biasing force in the -Y direction exerted by the solenoid 12 is balanced with the biasing force in the +Y direction exerted by the spring 14, the communication between the secondary pressure port P4 and the drain port P3 is shut off by the first land portion 713a, and the discharge of the working oil from the secondary pressure port P4 is stopped. Note that, in the state shown in FIG. 10C, the input port P1 and the output port P2 are held at a state in which they are communicated with each other.

In the valve device 710, the first switching valve 730 is used for detecting the failure (fail) of the solenoid 12. This will be specifically described below.

As shown in FIG. 9, the first switching valve 730 has the normal operation position N (corresponding to the positions shown in FIGs. 10B and 10C) and the fail operation position O (corresponding to the position shown in FIG. 10A). At the normal operation position N, the input port P1 and the output port P2 are communicated with each other, and the communication between the output port P2 and the drain port P3 is shut off. At the fail operation position O, the communication between the input port P1 and the output port P2 is shut off, and the output port P2 and the drain port P3 are communicated with each other.

In the present embodiment, even when the operation lever 41 is not operated, in a state in which the pump device PU is under operation, the minimum command current is applied to the solenoid 12. In a state in which the minimum command current is applied to the solenoid 12 of the valve device 710, the first switching valve 730 is switched to the normal operation position N. Therefore, in a state in which the pump device PU is under operation, the first switching valve 730 is held at the normal operation position N regardless of whether the operation lever 41 is operated or not. As a result, the output port P2 is maintained at the primary pressure.

In the event of failure of the solenoid 12, the biasing force exerted by the solenoid 12 is lost, and so, the first switching valve 730 is switched from the normal operation position N to the fail operation position O by the biasing force exerted by the spring 14. As a result, the output port P2 and the drain port P3 are communicated with each other, and so, the working oil in the pressure chamber 50a of the lock mechanism 50 is discharged to the tank T through the passage 761 and the first switching valve 730. As a result, the horsepower control by the horsepower control mechanism M2 is enabled.

Note that, in the event of failure of the solenoid 12, because the secondary pressure output from the electromagnetic proportional pressure reducing valve 720 becomes maximum (becomes the primary pressure), the pressure in the pressure chamber 8a of the flow rate control mechanism M1 is increased. As a result, the flow rate control mechanism M1 is brought into the state of requesting the maximum discharge flow rate from the pump P.

Other operations of the flow rate control unit M of the flow rate control device 700 are the same as those in the flow rate control device 100, and thus description thereof will be omitted.

According to the valve device 710 and the flow rate control device 700 in the third embodiment configured as described above, the following operational advantages are obtained.

In the flow rate control device 700, at the time of the normal operation state, in other words, when the solenoid 12 has not failed, the flow rate control is performed by the flow rate control mechanism M1, and in the event of failure of the solenoid 12, the horsepower control is performed by the horsepower control mechanism M2. As a result, even in the event of failure of the solenoid 12, it is possible to reliably control the flow rate of the pump P.

In addition, in the valve device 710 of the present embodiment, the electromagnetic proportional pressure reducing valve 720 and the first switching valve 730 are formed integrally, and furthermore, the valve body of the electromagnetic proportional pressure reducing valve 720 and the valve body of the first switching valve 730 are formed integrally by a single spool 13. With such a configuration, it is possible to reduce the size of the valve device 710 and to reduce cost because the number of components is decreased.

Furthermore, even when the inverse proportional type electromagnetic proportional pressure reducing valve 720 is used, the similar effects as those in the case in which the direct proportional type electromagnetic proportional pressure reducing valves 20 and 520 are used can be achieved.

### <Fourth Embodiment>

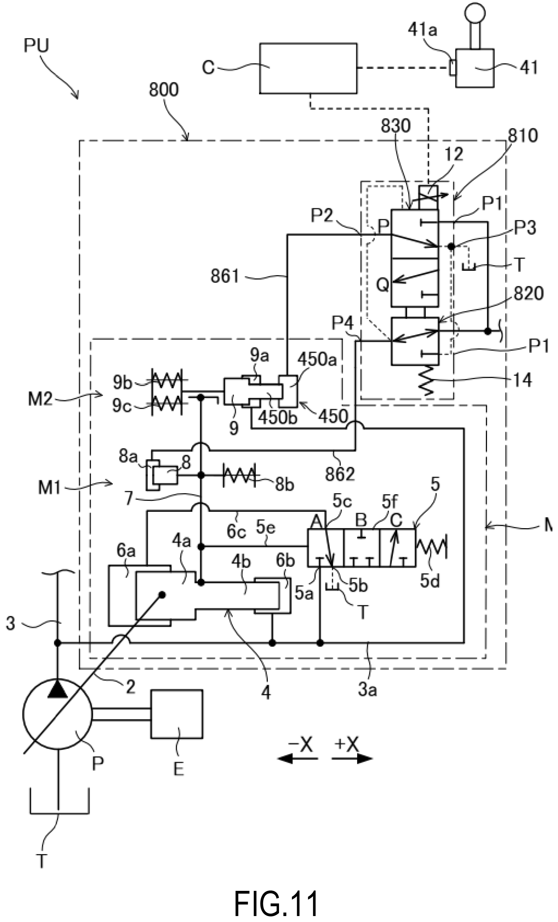

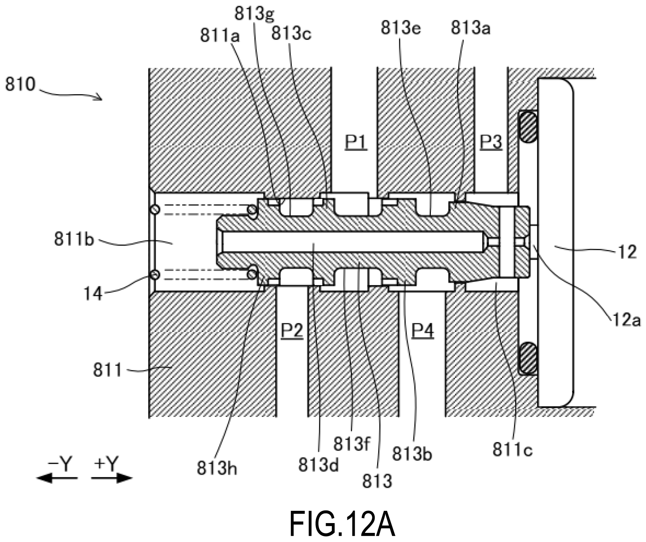

Next, a valve device 810 according to a fourth embodiment and a flow rate control device 800 including the valve device 810 will be described with reference to FIGs. 11 and 12A to 12C.

In the flow rate control device 700 according to the third embodiment, the first switching valve 730 of the valve device 710 is configured such that the output port P2 and the drain port P3 are communicated with each other at the fail operation position O, whereas in the flow rate control device 800 according to the fourth embodiment, a first switching valve 830 of the valve device 810 is configured such that the input port P1 and the output port P2 are communicated with each other at a fail operation position Q, and thus differs from the flow rate control device 700 of the third embodiment. In addition, the flow rate control device 700 according to the third embodiment includes the lock mechanism 50, whereas the flow rate control device 800 according to the fourth embodiment includes the lock mechanism 450, and thus differs from the flow rate control device 700 of the third embodiment.

In the following, only points different from other embodiments will be described, and the same components are denoted by the same reference numerals and description thereof will be omitted.

As shown in FIG. 11, the valve device 810 includes: the solenoid 12; an electromagnetic proportional pressure reducing valve 820 that reduces the primary pressure and adjusts the primary pressure to the secondary pressure in accordance with the command current applied to the solenoid 12; the first switching valve 830 that is switched to a normal operation position P or the fail operation position Q in accordance with the biasing force generated by the solenoid 12.

The electromagnetic proportional pressure reducing valve 820 according to the present embodiment is an inverse proportional type electromagnetic proportional pressure reducing valve that outputs a smaller secondary pressure as the command current applied to the solenoid 12 is increased.

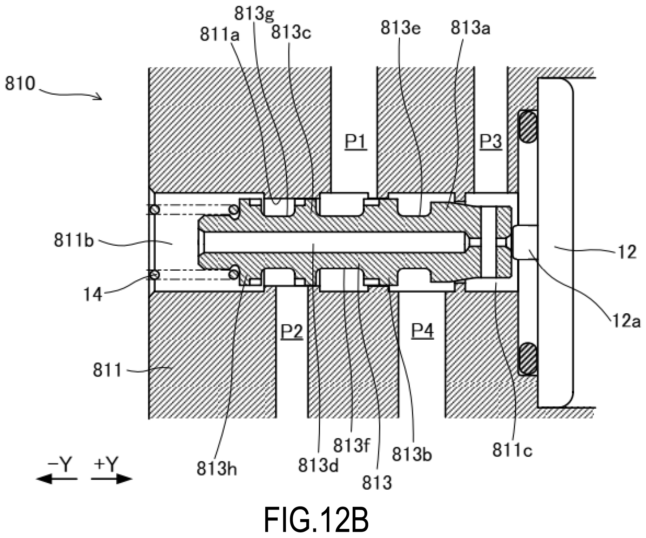

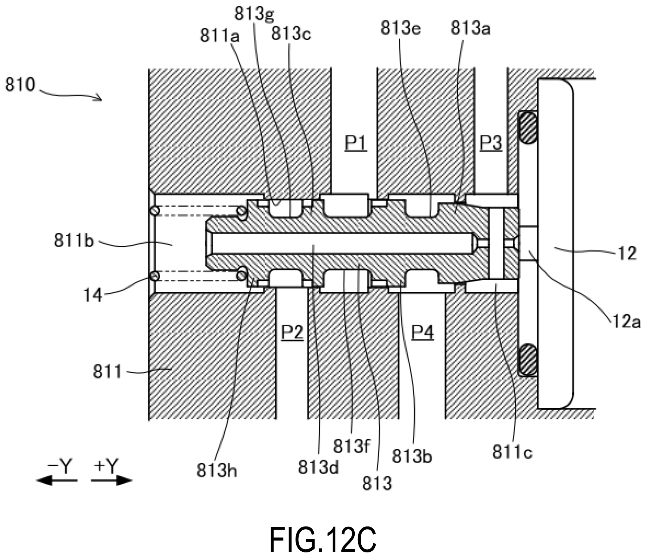

A specific configuration of the valve device 810 will be described with reference to FIGs. 11 and 12A to 12C. FIG. 12A is a sectional view showing a main relevant part of the valve device 810 in a non-energized state of the solenoid 12. FIG. 12B is a sectional view showing the main relevant part of the valve device 810 in an energized state of the solenoid 12. FIG. 12C is a sectional view showing the main relevant part of the valve device 810 in a state in which the electromagnetic proportional pressure reducing valve 820 has reached a set pressure.

As shown in FIGs. 12A, 12B, and 12C, the valve device 810 includes a housing 811, the solenoid 12, a spool 813 serving as the valve body, and the spring 14.

The housing 811 is formed with a cylindrical accommodation hole 811a that slidably accommodates the spool 813. The spring 14 that biases the spool 813 in the +Y direction is provided on the first end surface side of the spool 813. The solenoid 12 that biases the spool 813 in the -Y direction is provided on the second end surface side of the spool 813.

The housing 811 further includes: the input port P1 to which the primary pressure (the working fluid from the hydraulic pressure source) is guided; the output port P2; the drain port P3 that communicates with the tank T; and the secondary pressure port P4 from which the secondary pressure, which has been adjusted by reducing the primary pressure, is output (see also FIG. 11).

The spool 813 is biased in the +Y direction by the biasing force exerted by the spring 14 and is pressed against the plunger 12a of the solenoid 12. In other words, the plunger 12a of the solenoid 12 and the second end surface of the spool 813 are in a state in which they are always in contact with each other. Therefore, the position of the spool 813 is changed when the current applied to the solenoid 12 is changed.

As shown in FIGs. 12A, 12B, and 12C, the spool 813 includes: a first land portion 813a; a second land portion 813b; a third land portion 813c; a fourth land portion 813h; a communication passage 813d that extends in the axial direction of the spool 813 and that communicates a space 811b facing the first end surface of the spool 813 with a space 811c facing the second end surface of the spool 813; a first annular groove 813e that is formed between the first land portion 813a and the second land portion 813b; a second annular groove 813f that is formed between the second land portion 813b and the third land portion 813c; and a third annular groove 813g that is formed between the third land portion 813c and the fourth land portion 813h.

The first land portion 813a, the second land portion 813b, the third land portion 813c, and the fourth land portion 813h are provided at intervals in the axial direction in this order from the solenoid 12 side. The first land portion 813a is formed to have a tapered shape whose diameter is reduced toward the second end surface side (toward the solenoid 12 side) of the spool 813. The outer diameter of a portion of the first land portion 813a that faces the second land portion 813b across the first annular groove 813e is smaller than the outer diameter of the second land portion 813b, and the second land portion 813b, the third land portion 813c and the fourth land portion 813h are formed to have the same outer diameter.

The first land portion 813a controls the communication between the secondary pressure port P4 and the drain port P3. The second land portion 813b controls the communication between the input port P1 and the secondary pressure port P4. The third land portion 813c controls the communication between the input port P1 and the output port P2. The fourth land portion 813h controls the communication between the output port P2 and the drain port P3.

The space 811b is formed as a space that accommodates the spring 14 in the accommodation hole 811a. The space 811b is always in communication with the drain port P3 through the communication passage 813d.

The space 811c is provided on the solenoid 12 side of the accommodation hole 811a and is defined by the housing 811, the solenoid 12, and the spool 813 (the first land portion 813a). The space 811c is always in communication with the drain port P3.

In the present embodiment, the solenoid 12, the spring 14, the input port P1, the secondary pressure port P4, the drain port P3, the first land portion 813a of the spool 813, and the second land portion 813b of the spool 813 constitute the electromagnetic proportional pressure reducing valve 820. In addition, the solenoid 12, the spring 14, the input port P1, the output port P2, the drain port P3, the third land portion 813c of the spool 813, and the fourth land portion 813h of the spool 813 constitute the first switching valve 830. In other words, in the valve device 810 of the present embodiment, the electromagnetic proportional pressure reducing valve 820 and the first switching valve 830 are formed integrally, and the valve body of the electromagnetic proportional pressure reducing valve 820 and the valve body of the first switching valve 830 are formed integrally by a single spool 813. Furthermore, the electromagnetic proportional pressure reducing valve 820 and the first switching valve 830 are controlled by a single solenoid 12.

The operation of the valve device 810 configured as described above will be described.

In a state in which no current is applied to the solenoid 12, the spool 813 is positioned at the position shown in FIG. 12A. Specifically, the communication between the secondary pressure port P4 and the drain port P3 is shut off by the first land portion 813a, and the input port P1 and the secondary pressure port P4 are communicated with each other. In this state, the pressure of the secondary pressure port P4 is equal to the primary pressure (the pressure in the input port P1). Furthermore, the input port P1 and the output port P2 are communicated with each other, and the communication between the output port P2 and the drain port P3 is shut off by the fourth land portion 813h.

At the position shown in FIG. 12A, because the input port P1 and the secondary pressure port P4 are communicated with each other, the working oil from the hydraulic source is supplied to the pressure chamber 8a of the flow rate control mechanism M1 through the input port P1, the secondary pressure port P4, and a passage 862 (see FIG. 11). In addition, because the input port P1 and the output port P2 are communicated with each other, the working oil from the hydraulic source is supplied to the pressure chamber 450a of the lock mechanism 450 through the input port P1, the output port P2, and the passage 862 (see FIG. 11).

As described above, the outer diameter of a portion of the first land portion 813a that faces the second land portion 813b across the first annular groove 813e in the spool 813 is smaller than the outer diameter of the second land portion 813b. Therefore, when the secondary pressure acts on these portions, the biasing force in the -Y direction (in the leftward direction) in FIG. 12A acts on the spool 813 due to the difference in the pressure receiving areas of these portions. This biasing force biases the spool 813 so as to oppose the biasing force exerted by the spring 14. In other words, the pressure acting due to the difference in the pressure receiving areas between the first land portion 813a and the second land portion 813b corresponds to the feedback pressure in the electromagnetic proportional pressure reducing valve 820. Note that the configuration related to the difference in the pressure receiving areas between the first land portion 813a and the second land portion 813b corresponds to the "feedback portion" described in the Scope of Claims.

In the valve device 810, the spring load of the spring 14 is set such that, in a state in which no current is applied to the solenoid 12, the biasing force in the +Y direction exerted by the spring 14 exceeds the biasing force in the -Y direction by the feedback pressure. As a result, in the state in which no current is applied to the solenoid 12, the spool 813 is held at the position shown in FIG. 12A.

When the operation lever 41 is operated and the command current is applied to the solenoid 12 from the controller C, the total of the biasing force exerted by the solenoid 12 and the biasing force by the feedback pressure exceeds the biasing force exerted by the spring 14, and the spool 813 is moved from the position shown in FIG. 12A to the position shown in FIG. 12B (in the -Y direction). As a result, the communication between the input port P1 and the secondary pressure port P4 is shut off, and the secondary pressure port P4 and the drain port P3 are communicated with each other. In addition, the communication between the input port P1 and the output port P2 is shut off by the third land portion 813c, and the output port P2 and the drain port P3 are communicated with each other.

As the secondary pressure port P4 and the drain port P3 are communicated with each other, the working oil in the pressure chamber 8a, the passage 862, and the secondary pressure port P4 is discharged to the tank T, and the pressure of the secondary pressure port P4 is decreased. In addition, as the output port P2 and the drain port P3 are communicated with each other, the working oil in the pressure chamber 450a of the lock mechanism 450 is discharged to the tank T through a passage 861, the output port P2, and the drain port P3. As a result, the horsepower control by the horsepower control mechanism M2 is disabled.

When the pressure in the secondary pressure port P4 is decreased and when the spool 813 is moved to the position (the position shown in FIG. 12C) at which a total biasing force of the biasing force in the -Y direction by the feedback pressure acting on the spool 813 and the biasing force in the -Y direction exerted by the solenoid 12 is balanced with the biasing force in the +Y direction exerted by the spring 14, the communication between the secondary pressure port P4 and the drain port P3 is shut off by the first land portion 813a, and the discharge of the working oil from the secondary pressure port P4 is stopped. Note that, in the state shown in FIG. 12C, the input port P1 and the output port P2 are held at a state in which the communication therebetween is shut off.

In the valve device 810, the first switching valve 830 is used for detecting failure (fail) of the solenoid 12. This will be specifically described below.

As shown in FIG. 11, the first switching valve 830 has the normal operation position P (corresponding to the positions shown in FIGs. 12B and 12C) and the fail operation position Q (corresponding to the position shown in FIG. 12A). At the normal operation position P, the communication between the input port P1 and the output port P2 is shut off, and the output port P2 and the drain port P3 are communicated with each other. At the fail operation position Q, the input port P1 and the output port P2 are communicated with each other, and the communication between the output port P2 and the drain port P3 is shut off.

In the present embodiment, even when the operation lever 41 is not operated, in a state in which the pump device PU is under operation, the minimum command current is applied to the solenoid 12. In a state in which the minimum command current is applied to the solenoid 12 of the valve device 810, the first switching valve 830 is switched to the normal operation position P. Therefore, in a state in which the pump device PU is under operation, the first switching valve 830 is held at the normal operation position P regardless of whether the operation lever 41 is operated or not. As a result, the output port P2 is maintained at the tank pressure.

In the event of failure of the solenoid 12, the biasing force exerted by the solenoid 12 is lost, and so, the first switching valve 830 is switched from the normal operation position P to the fail operation position Q by the biasing force exerted by the spring 14. As a result, the input port P1 and the output port P2 are communicated with each other, and so, the working oil from the hydraulic source is supplied to the pressure chamber 450a of the lock mechanism 450. As a result, the horsepower control by the horsepower control mechanism M2 is enabled.

Note that, in the event of failure of the solenoid 12, because the secondary pressure output from the electromagnetic proportional pressure reducing valve 820 becomes maximum (becomes the primary pressure), the pressure in the pressure chamber 8a of the flow rate control mechanism M1 is increased. As a result, the flow rate control mechanism M1 is brought into the state of requesting the maximum discharge flow rate from the pump P.

Other operations of the flow rate control unit M of the flow rate control device 800 are the same as those in other embodiments, and thus description thereof will be omitted.

According to the valve device 810 and the flow rate control device 800 in the fourth embodiment configured as described above, the similar operational advantages as those of the flow rate control device 700 according to the third embodiment can be obtained.

Note that, the above embodiments may be combined with each other. For example, in the flow rate control device 200 and the flow rate control device 400 shown in FIGs. 3 and 5, it is possible to replace the valve device 10 with the valve device 810 shown in FIG. 11 and to replace the flow rate control mechanism M1 with the flow rate control mechanism M11.

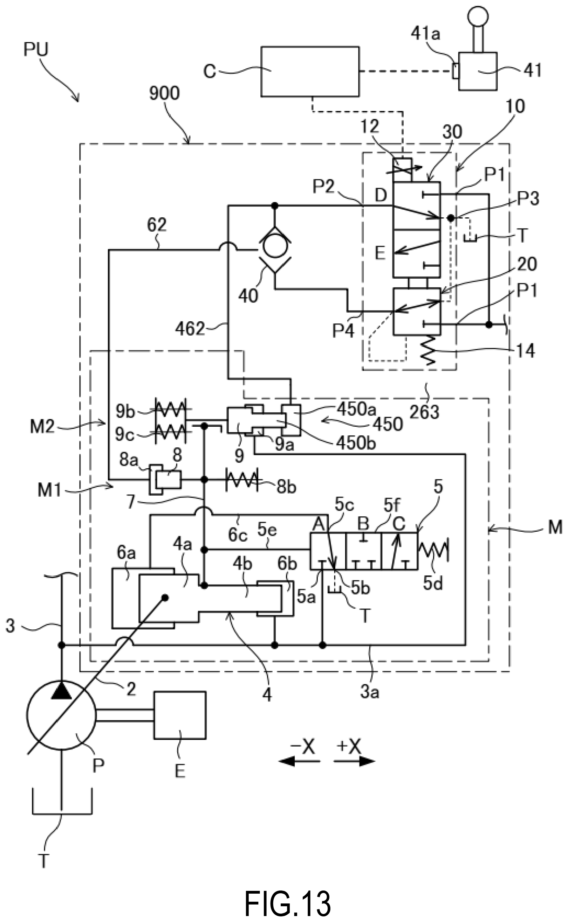

In addition, as shown as a flow rate control device 900 in FIG. 13, instead of the configuration related to the lock mechanism 50 in the flow rate control device 100 shown in FIG. 1, the configuration related to the lock mechanism 450 of the flow rate control device 400 shown in FIG. 5 may also be adopted.

Configurations, operations, and effects of the embodiments of the present invention configured as described above will be collectively described below.

The valve device 10, 510, 710, 810 includes: the solenoid 12; the electromagnetic proportional pressure reducing valve 20, 720, 820 that reduces the primary pressure and adjusts the primary pressure to the secondary pressure in accordance with the command current applied to the solenoid 12; the first switching valve 30, 530, 730, 830 having the normal operation position D, L, N, P and the fail operation position E, M, O, Q, the first switching valve 30, 530, 730, 830 being configured to be switched between the normal operation position D, L, N, P and the fail operation position E, M, O, Q in accordance with the biasing force generated by the solenoid 12, the first switching valve 30, 530, 730, 830 being configured to be switched from the normal operation position D, L, N, P to the fail operation position E, M, O, Q in the event of failure of the solenoid 12, wherein the valve body of the electromagnetic proportional pressure reducing valve 20, 720, 820 and the valve body of the first switching valve 30, 530, 730, 830 are formed integrally by a single spool 13, 513, 713, 813, the first switching valve 30, 530, 730, 830 has: the input port P1, to which the primary pressure is guided, on the upstream side; the output port P2 on the downstream side; and the drain port P3 in communication with the tank T, and when the first switching valve 30, 530, 730, 830 is switched from the normal operation position D, L, N, P to the fail operation position E, M, O, Q, the pressure on the output port P2 side is changed as the communication between the output port P2 and the drain port P3 is switched to the communication between the output port P2 and the input port P1, or as the communication between the output port P2 and the input port P1 is switched to the communication between the output port P2 and the drain port P3.

With such a configuration, the valve device 10, 510, 710, 810 can thus be downsized. Because the valve body of the electromagnetic proportional pressure reducing valve 20, 720, 820 and the valve body of the first switching valve 30, 530, 730, 830 are formed integrally by a single spool 13, 513, 713, 813, compared to a case in which the spool 13, 513, 713, 813 is provided for each of the electromagnetic proportional pressure reducing valve 20, 720, 820 and the first switching valve 30, 530, 730, 830, it is possible to reduce flow passages, accommodation holes for accommodating the valve bodies, or the like. In addition, the first switching valve 30, 530, 730, 830 is switched by the solenoid 12 that adjusts the secondary pressure of the electromagnetic proportional pressure reducing valve 20, 720, 820, and in the event of failure of the solenoid 12, the pressure on the output port P2 side is changed as the first switching valve 30, 530, 730, 830 is mechanically switched from the normal operation position D, L, N, P to the fail operation position E, M, O, Q. As a result, for example, by detecting the pressure on the output port P2 side, it is possible to detect the failure of the solenoid 12. In addition, by enabling or disabling the control of the horsepower control mechanism M2 between the normal operation position D, L, N, P and the fail operation position E, M, O, Q of the first switching valve 30, 530, 730, 830, in the event of failure of the solenoid 12, the pressure on the output port P2 side can be switched automatically.

The valve device 10, 510, 710, 810 further includes the secondary pressure port P4 from which the secondary pressure is output, wherein the electromagnetic proportional pressure reducing valve 20, 720, 820 and the first switching valve 30, 530, 730, 830 have the input port P1 in common, and the communication between the output port P2 and the input port P1 and the communication between the secondary pressure port P4 and the input port P1 are controlled by the spool 13, 513, 713, 813.

With such a configuration, because the communication is controlled in accordance with the position of the spool 13, 513, 713, 813, the valve device 10, 510, 710, 810 can be formed with a single input port P1, and it is unnecessary to separately provide a flow passage for guiding the primary pressure to the input port P1. With such a configuration, it is possible to reduce the size of the valve device 10, 510, 710, 810.

The valve device 10 further includes: the secondary pressure port P4 from which the secondary pressure is output; the spring 14 configured to bias the spool 13 in the second direction, the second direction being opposite direction to the first direction in which the solenoid 12 is configured to bias the spool 13; and the feedback portion configured to be operated such that the secondary pressure biases the spool 13 in the second direction, wherein the spool 13 has: the first land portion 13a configured to establish or shut off communication between the secondary pressure port P4 and the drain port P3; the second land portion 13b provided with an interval from the first land portion 13a, the second land portion 13b being configured to establish or shut off communication between the input port P1 and the secondary pressure port P4; and the third land portion 13c provided with an interval from the second land portion 13b, the third land portion 13c being configured to selectively establish communication between the output port P2 and either one of the input port P1 and the drain port P3.

The valve device 810 further includes: the secondary pressure port P4 from which the secondary pressure is output; the spring 14 configured to bias the spool 813 in the second direction, the second direction being opposite direction to the first direction in which the solenoid 12 is configured to bias the spool 813; and the feedback portion configured to be operated such that the secondary pressure biases the spool 813 in the first direction, wherein the spool 813 has: the first land portion 813a configured to establish or shut off communication between the secondary pressure port P4 and the drain port P3; the second land portion 813b provided with an interval from the first land portion 813a, the second land portion 813b being configured to establish or shut off communication between the input port P1 and the secondary pressure port P4; the third land portion 813c provided with an interval from the second land portion 813b, the third land portion 813c being configured to establish or shut off communication between the input port P1 and the output port P2; and the fourth land portion 813h provided with an interval from the third land portion 813c, the fourth land portion 813h being configured to establish or shut off communication between the output port P2 and the drain port P3.

The valve device 510 further includes: the secondary pressure port P4 from which the secondary pressure is output; the spring 14 configured to bias the spool 513 in the second direction, the second direction being opposite direction to the first direction in which the solenoid 12 is configured to bias the spool 513; and the feedback portion configured to be operated such that the secondary pressure biases the spool 513 in the second direction, wherein the spool 513 has: the first land portion 513a configured to establish or shut off communication between the secondary pressure port P4 and the drain port P3; the second land portion 513b provided with an interval from the first land portion 513a, the second land portion 513b being configured to establish or shut off communication between the input port P1 and the secondary pressure port P4; the third land portion 513c provided with an interval from the second land portion 513b, the third land portion 513c being configured to establish or shut off communication between the input port P1 and the output port P2; and the fourth land portion 513h provided with an interval from the third land portion 513c, the fourth land portion 513h being configured to establish or shut off communication between the output port P2 and the drain port P3.

The valve device 710 further includes: the secondary pressure port P4 from which the secondary pressure is output; the spring 14 configured to bias the spool 713 in the second direction, the second direction being opposite direction to the first direction in which the solenoid 12 is configured to bias the spool 713; and the feedback portion configured to be operated such that the secondary pressure biases the spool 713 in the first direction, wherein the spool 713 has: the first land portion 713a configured to establish or shut off communication between the secondary pressure port P4 and the drain port P3; the second land portion 713b provided with an interval from the first land portion 713a, the second land portion 713b being configured to establish or shut off communication between the input port P1 and the secondary pressure port P4; and the third land portion 713c provided with an interval from the second land portion 713b, the third land portion 713c being configured to selectively establish communication between the output port P2 and either one of the input port P1 and the drain port P3.

According to such configurations, because each of ports P1 to P4 is switched by the single spool 13, 513, 713, 813 in which the respective land portions 13a to 13c, 513a to 513c, 513h, 713a to 713c, 713h, 813a to 813c are formed, compared to a configuration in which a plurality of spools are used, for example, the number of ports can be reduced, and therefore, it is possible to reduce the size of the valve device 10, 510, 710, 810.

The valve device 10, 510, 710, 810 further includes the communication passage 13d, 513d, 713d, 813d formed so as to penetrate through the spool 13, 513, 713, 813, the communication passage 13d, 513d, 713d, 813d being configured to guide the working fluid to the drain port P3, the working fluid being discharged from the output port P2.

According to such a configuration, the working fluid discharged from the output port P2 can be merged with and discharged to the drain port P3 through the communication passage 13d, 513d, 713d, 813d that is formed in the spool 13, 513, 713, 813. With such a configuration, the number of ports formed in the housing 11, 511, 711, 811 can be reduced, and thus, it is possible to reduce the size of the valve device 10, 510, 710, 810.

The flow rate control device 100, 200, 300, 500, 700 includes: the valve device 10, 510, 710; the flow rate control mechanism M1, M11 configured to control the flow rate of the pump P in accordance with the secondary pressure; and the horsepower control mechanism M2 configured to perform the horsepower control of the pump P in the event of failure of the solenoid 12, wherein the horsepower control mechanism M2 has the lock pin 50b, 450b configured to enable or disable the control of the horsepower control mechanism M2, at the time of the normal operation state of the valve device 10, 510, 710, the secondary pressure or the primary pressure acts on the lock pin 50b, 450b, thereby disabling the control of the horsepower control mechanism M2, and in the event of failure of the solenoid 12, the secondary pressure or the primary pressure does not act on the lock pin 50b, 450b, thereby enabling the control of the horsepower control mechanism M2.

According to such a configuration, even in the event of failure of the solenoid 12 and when the secondary pressure from the electromagnetic proportional pressure reducing valve 20, 720 cannot be controlled, it is possible to control the pump P by switching to the horsepower control.

The flow rate control device 200, 300 further includes the second switching valve (the switching valve 240, the switching valve 341) configured to be switched in accordance with the pressure output from the output port P2, wherein the second switching valve (the switching valve 240, the switching valve 341) is switched so as to supply the primary pressure to the lock pin 50b of the horsepower control mechanism M2 at the time of the normal operation state of the valve device 10 and to discharge the pressure acting on the lock pin 50b of the horsepower control mechanism M2 in the event of failure of the solenoid 12.

The flow rate control device 400, 600, 800, 900 includes: the valve device 10; the flow rate control mechanism M1, M11 configured to control the flow rate of the pump P in accordance with the secondary pressure; and the horsepower control mechanism M2 configured to perform the horsepower control of the pump P in the event of failure of the solenoid 12, wherein the horsepower control mechanism M2 has the lock pin 450b configured to enable or disable the control of the horsepower control mechanism M2, at the time of the normal operation state of the valve device 10, 810, the secondary pressure or the primary pressure does not act on the lock pin 450b, thereby disabling the control of the horsepower control mechanism M2, and in the event of failure of the solenoid 12, the primary pressure acts on the lock pin 450b, thereby enabling the control of the horsepower control mechanism M2.

According to such a configuration, even in the event of failure of the solenoid 12 and the secondary pressure from the electromagnetic proportional pressure reducing valve 20, 820 cannot be controlled, it is possible to control the pump P by switching to the horsepower control.

The flow rate control device 100, 300, 400 further includes the high pressure selection valve 40, 342 configured to select whichever is higher of the secondary pressure and the pressure output from the output port P2, and to output the selected pressure to the flow rate control mechanism.

According to such a configuration, because the high pressure selection valve 40, 342 is employed, compared to a case in which a control is performed by using a switching valve, it is possible to reduce the size of the device.

The flow rate control device 200, 400 further includes the second switching valve (the switching valve 240, the switching valve 440) configured to be switched in accordance with the pressure output from the output port P2, wherein the second switching valve (the switching valve 240, the switching valve 440) is configured to supply the secondary pressure to the flow rate control mechanism M1 at the time of the normal operation state of the valve device 10 and to supply the primary pressure to the flow rate control mechanism M1 in the event of failure of the solenoid 12.

Embodiments of this invention were described above, but the above embodiments are merely examples of applications of this invention, and the technical scope of this invention is not limited to the specific constitutions of the above embodiments.

This application claims priority based on Japanese Patent Application No.2023-158373 filed with the Japan Patent Office on September 22, 2023, the entire contents of which are incorporated into this specification.

## Claims

1. A valve device comprising:
a solenoid;
an electromagnetic proportional pressure reducing valve configured to reduce a primary pressure and adjust the primary pressure to a secondary pressure in accordance with a command current applied to the solenoid; and
a first switching valve having a normal operation position and a fail operation position, the first switching valve being configured to be switched between the normal operation position and the fail operation position in accordance with a biasing force generated by the solenoid, the first switching valve being configured to be switched from the normal operation position to the fail operation position in an event of failure of the solenoid, wherein
a valve body of the electromagnetic proportional pressure reducing valve and a valve body of the first switching valve are formed integrally by a single spool,
the first switching valve has: an input port, to which the primary pressure is guided, on an upstream side; an output port on a downstream side; and a drain port in communication with a tank, and
when the first switching valve is switched from the normal operation position to the fail operation position, a pressure on the output port side is changed as communication between the output port and the drain port is switched to communication between the output port and the input port, or as communication between the output port and the input port is switched to communication between the output port and the drain port.

2. The valve device according to claim 1, further comprising
a secondary pressure port from which the secondary pressure is output, wherein
the electromagnetic proportional pressure reducing valve and the first switching valve have the input port in common, and
communication between the output port and the input port and communication between the secondary pressure port and the input port are controlled by the spool.

3. The valve device according to claim 1, further comprising:
a secondary pressure port from which the secondary pressure is output;
a spring configured to bias the spool in a second direction, the second direction being opposite direction to a first direction in which the solenoid is configured to bias the spool; and
a feedback portion configured to be operated such that the secondary pressure biases the spool in the second direction, wherein
the spool has:
a first land portion configured to establish or shut off communication between the secondary pressure port and the drain port;
a second land portion provided with an interval from the first land portion, the second land portion being configured to establish or shut off communication between the input port and the secondary pressure port; and
a third land portion provided with an interval from the second land portion, the third land portion being configured to selectively establish communication between the output port and either one of the input port and the drain port.

4. The valve device according to claim 1, further comprising:
a secondary pressure port from which the secondary pressure is output;
a spring configured to bias the spool in a second direction, the second direction being opposite direction to a first direction in which the solenoid is configured to bias the spool; and
a feedback portion configured to be operated such that the secondary pressure biases the spool in the first direction, wherein
the spool has:
a first land portion configured to establish or shut off communication between the secondary pressure port and the drain port;
a second land portion provided with an interval from the first land portion, the second land portion being configured to establish or shut off communication between the input port and the secondary pressure port;
a third land portion provided with an interval from the second land portion, the third land portion being configured to establish or shut off communication between the input port and the output port; and
a fourth land portion provided with an interval from the third land portion, the fourth land portion being configured to establish or shut off communication between the output port and the drain port.

5. The valve device according to claim 1, further comprising:
a secondary pressure port from which the secondary pressure is output;
a spring configured to bias the spool in a second direction, the second direction being opposite direction to a first direction in which the solenoid is configured to bias the spool; and
a feedback portion configured to be operated such that the secondary pressure biases the spool in the second direction, wherein
the spool has:
a first land portion configured to establish or shut off communication between the secondary pressure port and the drain port;
a second land portion provided with an interval from the first land portion, the second land portion being configured to establish or shut off communication between the input port and the secondary pressure port;
a third land portion provided with an interval from the second land portion, the third land portion being configured to establish or shut off communication between the input port and the output port; and
a fourth land portion provided with an interval from the third land portion, the fourth land portion being configured to establish or shut off communication between the output port and the drain port.

6. The valve device according to claim 1, further comprising:
a secondary pressure port from which the secondary pressure is output;
a spring configured to bias the spool in a second direction, the second direction being opposite direction to a first direction in which the solenoid is configured to bias the spool; and
a feedback portion configured to be operated such that the secondary pressure biases the spool in the first direction, wherein
the spool has:
a first land portion configured to establish or shut off communication between the secondary pressure port and the drain port;
a second land portion provided with an interval from the first land portion, the second land portion being configured to establish or shut off communication between the input port and the secondary pressure port;
a third land portion provided with an interval from the second land portion, the third land portion being configured to selectively establish communication between the output port and either one of the input port and the drain port.

7. The valve device according to claim 1, further comprising
a communication passage formed so as to penetrate through the spool, the communication passage being configured to guide a working fluid to the drain port, the working fluid being discharged from the output port.

8. A flow rate control device configured to control a flow rate of a pump, the flow rate control device comprising:
a valve device according to claim 1;
a flow rate control mechanism configured to control the flow rate of the pump in accordance with the secondary pressure; and
a horsepower control mechanism configured to perform a horsepower control of the pump in an event of failure of the solenoid, wherein
the horsepower control mechanism has a lock pin configured to enable or disable the control of the horsepower control mechanism,
at time of normal operation state of the valve device, the secondary pressure or the primary pressure acts on the lock pin, thereby disabling the control of the horsepower control mechanism, and
in the event of failure of the solenoid, the secondary pressure or the primary pressure does not act on the lock pin, thereby enabling the control of the horsepower control mechanism.

9. The flow rate control device according to claim 8, further comprising
a second switching valve configured to be switched in accordance with a pressure output from the output port, wherein
the second switching valve is switched so as to supply the primary pressure to the lock pin of the horsepower control mechanism at the time of the normal operation state of the valve device and to discharge a pressure acting on the lock pin of the horsepower control mechanism in the event of failure of the solenoid.

10. A flow rate control device configured to control a flow rate of a pump, the flow rate control device comprising:
a valve device according to claim 1;
a flow rate control mechanism configured to control the flow rate of the pump in accordance with the secondary pressure; and
a horsepower control mechanism configured to perform a horsepower control of the pump in an event of failure of the solenoid, wherein
the horsepower control mechanism has a lock pin configured to enable or disable the control of the horsepower control mechanism,
at time of normal operation state of the valve device, the secondary pressure or the primary pressure does not act on the lock pin, thereby disabling the control of the horsepower control mechanism, and
in the event of failure of the solenoid, the primary pressure acts on the lock pin, thereby enabling the control of the horsepower control mechanism.

11. The flow rate control device according to claim 8 or 10, further comprising
a high pressure selection valve configured to select whichever is higher of the secondary pressure and a pressure output from the output port, and to output the selected pressure to the flow rate control mechanism.

12. The flow rate control device according to claim 8 or 10, further comprising
a second switching valve configured to be switched in accordance with a pressure output from the output port, wherein
the second switching valve is configured to supply the secondary pressure to the flow rate control mechanism at time of normal operation state of the valve device and to supply the primary pressure to the flow rate control mechanism in an event of failure of the solenoid.
